# EUROPEAN PATENT SPECIFICATION

(11) **EP 4 290 836 B1**
(45) Date of publication and mention of the grant of the patent: **15.04.2026**
(21) Application number: 23700018.7
(22) Date of filing: 05.01.2023
(51) Int. Cl.: H04M 1/02, G06F 1/16, H05K 1/14

(54) **FOLDABLE ELECTRONIC DEVICE**
FALTBARE ELEKTRONISCHE VORRICHTUNG
DISPOSITIF ÉLECTRONIQUE PLIABLE

(30) Priority: 29.04.2022 KR 20220053688; 11.07.2022 KR 20220085211
(43) Date of publication of application: 13.12.2023
(73) Proprietor: Samsung Electronics Co., Ltd., Suwon-si, Gyeonggi-do 16677 (KR)
(72) Inventor: KIM, Yoonsik, Gyeonggi-do 16677 (KR)
(74) Representative: Gulde & Partner
(86) International application number: PCT/KR2023/000255
(87) International publication number: WO 2023/210918

(56) References cited:
- EP-A1- 3 951 552
- KR-A- 20180 122 210
- KR-A- 20210 091 848
- KR-A- 20210 101 717
- KR-A- 20210 153 523
- US-A1- 2020 081 495
- US-A1- 2020 267 839

## Description

### [Technical Field]

Various embodiments of the disclosure relate to a foldable electronic device including a flexible printed circuit board (FPCB).

### [Background Art]

The electronic device may display images through the display disposed in the housing. The image displayed on the display may include a plurality of pixels. The display may receive a data voltage or a light emission signal for displaying an image from a display driver IC (DDI).

The electronic device may correspond to, e.g., a portable electronic device, such as a smartphone. The portable electronic device may provide functions, such as calling, video playback, and/or Internet search, based on various types of applications. The user desires to be able to use the function provided by the electronic device through a wider screen. Since portability may decrease as the screen becomes larger in the electronic device, there has been developed a structure that is foldable using a folding structure capable of providing a large screen while preventing the degradation of portability. In similar regards, publication US2020267839A1 relates to a foldable electronic device including a flexible printed circuit board (FPCB), a hinge structure connecting two housings, a hinge housing that includes a guide protrusion, and a reinforcement portion attached to the FPCB, and publication EP3951552A1 relates to an electronic device with a foldable structure including at least one flexible printed circuit board (FPCB) that extends across a folding axis between two housings.

### [Disclosure]

In an electronic device, various electrical elements (or electronic components) or a printed circuit board (PCB) on which the electrical elements are disposed may be disposed inside a housing. In the case of a foldable electronic device, a flexible printed circuit board (FPCB) that is easily bendable is used to connect the electrical elements.

The flexible printed circuit board may be flexibly bent at least in part so it is useful in narrow spaces and may connect an electrical element (e.g., as disposed on the main PCB) in a housing with an electrical element (e.g., as disposed on the sub PCB) in another housing.

When the foldable electronic device is repeatedly folded or unfolded, the flex portion of the flexible printed circuit board may be deformed without remaining shape and/or position (e.g., regular shape) when moved in a designated area (e.g., inside the hinge housing) and thus its lifespan may be shortened.

Further, repeated folding or unfolding of the foldable electronic device may damage the flex portion (e.g., bending part) of the flexible printed circuit board due to accumulated stress caused by friction with the housing, components, or other substrates.

According to an embodiment of the disclosure, there may be provided a foldable electronic device capable of preventing an asymmetrical shape in the flexible printed circuit board even when repeatedly folded or unfolded.

According to an embodiment of the disclosure, a foldable electronic device comprises a flexible printed circuit board (FPCB), a hinge structure connecting a first housing and a second housing, a hinge housing receiving at least a portion of the hinge structure and the FPCB and including a guide protrusion protruding upward from an inner surface, and a reinforcement portion coupled to the FPCB and including a guide portion for guiding a vertical movement of the FPCB along the guide protrusion in response to a movement of the first housing and the second housing, corresponding to the appended claims.

According to an embodiment of the disclosure, the flex portion of the flexible printed circuit board (FPCB) is limited as moving in upper and lower directions along the guide protrusions formed in the hinge housing, thus preventing an asymmetrical shape in the flexible printed circuit board in a designated area (e.g., inside the hinge housing).

### [Description of Drawings]

FIG. 1 is a block diagram illustrating an electronic device in a network environment according to various embodiments;
FIG. 2A is a front perspective view illustrating a foldable electronic device 200 in a flat state or unfolded state according to various embodiments of the disclosure;
FIG. 2B is a plan view illustrating a front surface of a foldable electronic device 200 in an unfolded state according to various embodiments of the disclosure;
FIG. 2C is a plan view illustrating a rear surface of a foldable electronic device 200 in an unfolded state according to various embodiments of the disclosure;
FIG. 2D is a perspective view illustrating a foldable electronic device 200 in a folded state according to various embodiments of the disclosure;
FIG. 3 is an exploded perspective view illustrating a foldable electronic device according to an embodiment of the disclosure;
FIG. 4 is a perspective view illustrating a hinge housing according to an embodiment of the disclosure;
FIG. 5 is an exploded view illustrating a flexible printed circuit board (FPCB) 260 according to an embodiment of the disclosure;
FIG. 6A is a view illustrating a state in which an FPCB and a hinge housing are separated in an embodiment of the disclosure;
FIG. 6B is a view illustrating a state in which an FPCB and a hinge housing are coupled in an embodiment of the disclosure;
FIG. 7 is a view illustrating an unfolded state of a foldable electronic device 200 according to an embodiment of the disclosure;
FIG. 8 is a view illustrating an unfolded state of a foldable electronic device 300 according to an embodiment of the disclosure;
FIG. 9 is a plan view illustrating an unfolded state of a foldable electronic device 200 according to an embodiment of the disclosure;
FIG. 10 is a cross-sectional view of the foldable electronic device, taken along line A-A' of FIG. 9 according to an embodiment of the disclosure;
FIG. 11 is a plan view illustrating a folded state of a foldable electronic device 200 according to an embodiment of the disclosure;
FIG. 12 is a cross-sectional view of the foldable electronic device, taken along line B-B' of FIG. 11 according to an embodiment of the disclosure;
FIG. 13 is a cross-sectional view illustrating operations of an FPCB between an unfolded state and a folded state of a foldable electronic device according to an embodiment;
FIG. 14 is a cross-sectional view illustrating an FPCB and a hinge housing in an unfolded state of a foldable electronic device according to an embodiment;
FIG. 15 is a cross-sectional view of the foldable electronic device, taken along line I-I' of FIG. 2D according to an embodiment of the disclosure;
FIG. 16A is a plan view illustrating an embodiment (first embodiment) of a reinforcement portion of an FPCB according to an embodiment of the disclosure;
FIG. 16B is a cross-sectional view taken along line C-C' of FIG. 16A according to an embodiment of the disclosure;
FIG. 17A is a plan view illustrating an embodiment (second embodiment) of a reinforcement portion of an FPCB according to an embodiment of the disclosure;
FIG. 17B is a cross-sectional view taken along line D-D' of FIG. 17A according to an embodiment of the disclosure;
FIG. 18A is a plan view illustrating an embodiment (third embodiment) of a reinforcement portion of an FPCB according to an embodiment of the disclosure;
FIG. 18B is a cross-sectional view taken along line E-E' of FIG. 18A according to an embodiment of the disclosure;
FIG. 19A is a plan view illustrating an embodiment (fourth embodiment) of a reinforcement portion of an FPCB according to an embodiment of the disclosure;
FIG. 19B is a plan view illustrating the reinforcement portion of FIG. 19A according to an embodiment of the disclosure;
FIG. 20 is a cross-sectional view illustrating a structure for mitigating friction generated when an FPCB asymmetrically moves in a foldable electronic device according to an embodiment of the disclosure;
FIG. 21A is a plan view illustrating a state of a flexible printed circuit board (FPCB) in an unfolded state of a foldable electronic device according to an embodiment of the disclosure;
FIG. 21B is a cross-sectional view taken along line F-F' of FIG. 21A according to an embodiment of the disclosure;
FIG. 22A is a plan view illustrating a state of a flexible printed circuit board (FPCB) in a folded state of a foldable electronic device according to an embodiment of the disclosure;
FIG. 22B is a cross-sectional view taken along line G-G' of FIG. 22A according to an embodiment of the disclosure; and
FIG. 23 is a cross-sectional view illustrating the movement of an FPCB by unfolding or folding of a foldable electronic device according to an embodiment of the disclosure.

### DETAILED DESCRIPTION

Embodiments of the present invention are now described with reference to the accompanying drawings in such a detailed manner as to be easily practiced by one of ordinary skill in the art. However, the present invention may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

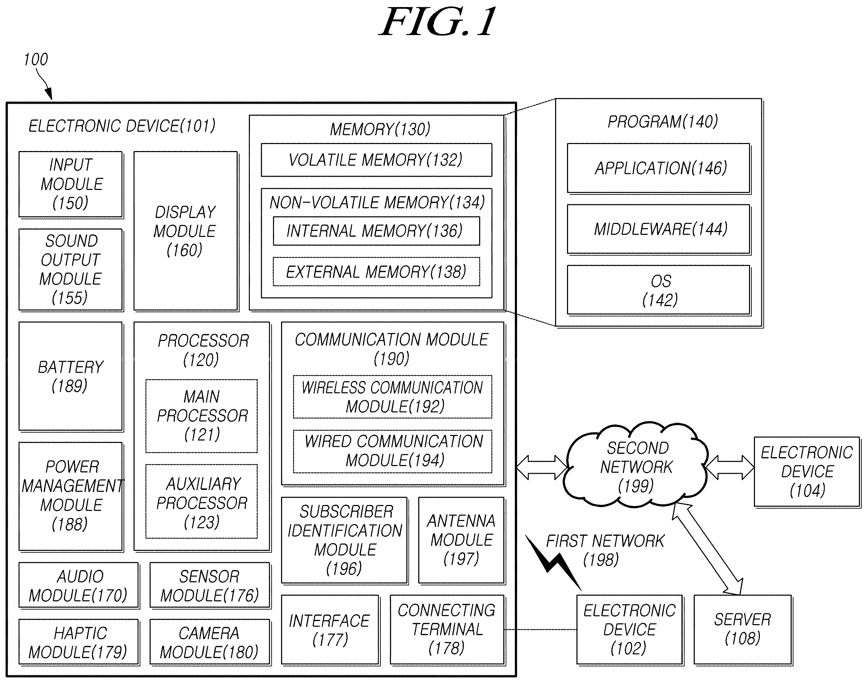

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

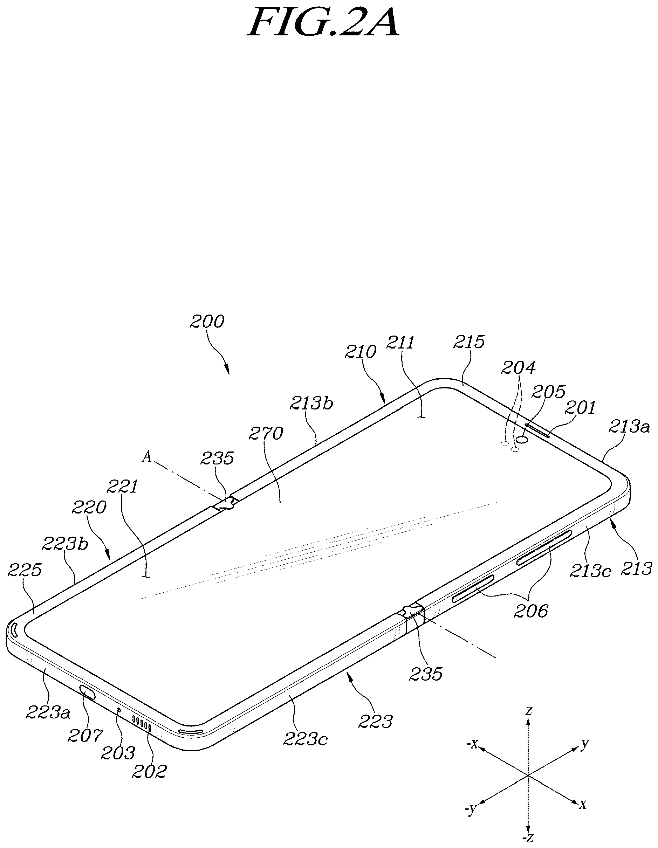

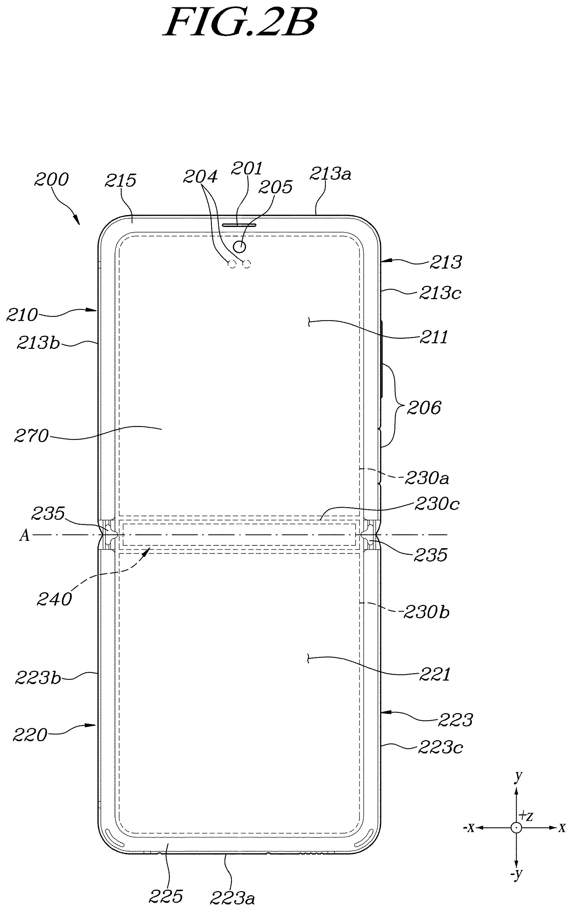

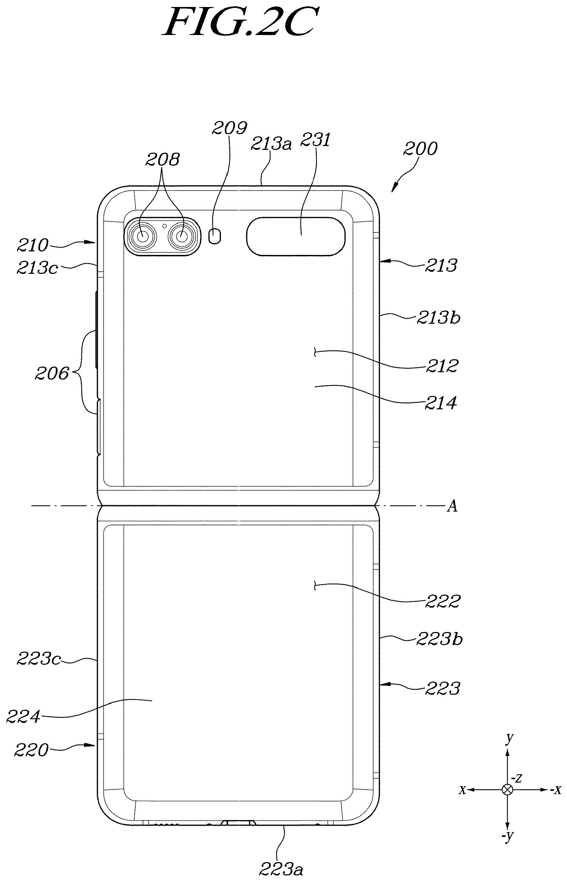

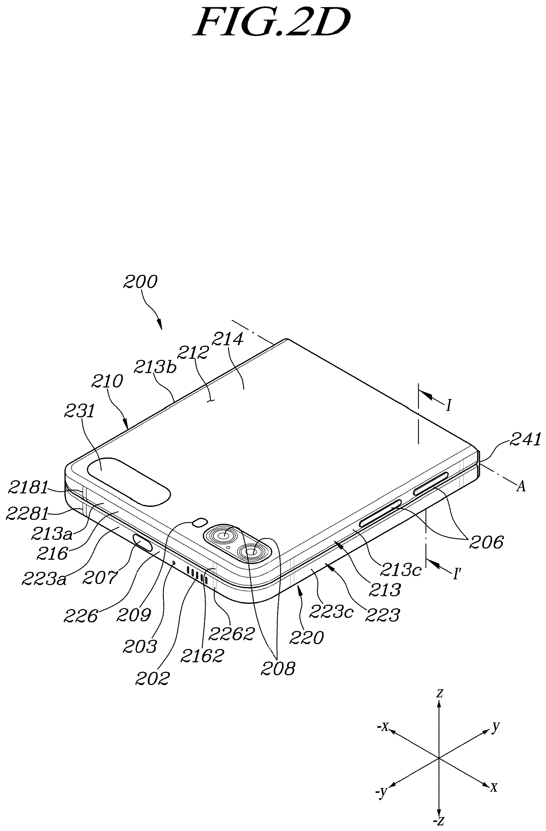

FIG. 2A is a front perspective view illustrating a foldable electronic device 200 in a flat state or unfolded state according to various embodiments of the disclosure. FIG. 2B is a plan view illustrating a front surface of a foldable electronic device 200 in an unfolded state according to various embodiments of the disclosure. FIG. 2C is a plan view illustrating a rear surface of a foldable electronic device 200 in an unfolded state according to various embodiments of the disclosure. FIG. 2D is a perspective view illustrating a foldable electronic device 200 in a folded state according to various embodiments of the disclosure.

The foldable electronic device 200 of FIGS. 2A to 2D may be at least partially similar to the electronic device 101 of FIG. 1 or may include another embodiment of the electronic device.

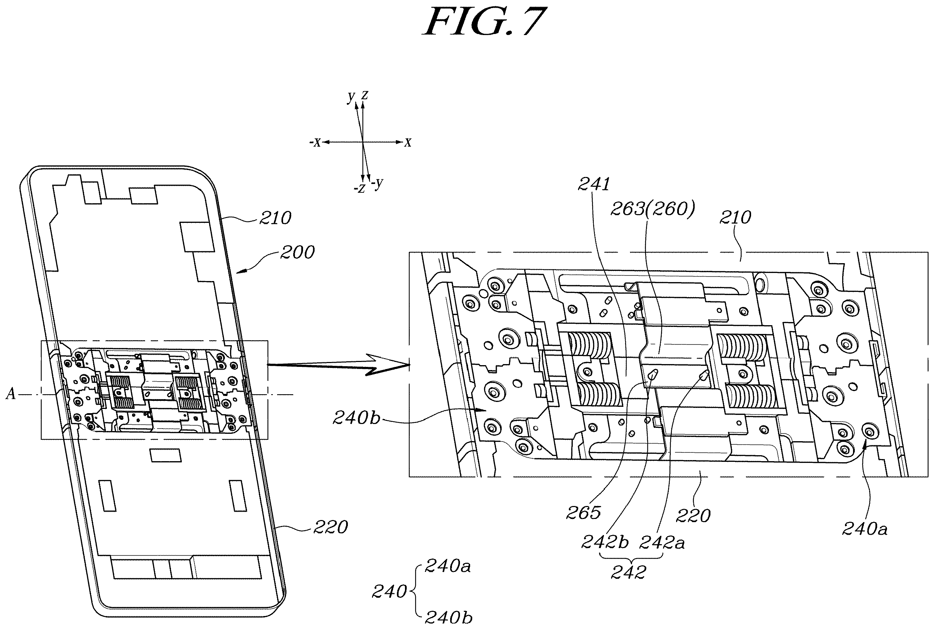

Referring to FIGS. 2A to 2D, in an embodiment, the foldable electronic device 200 may include a pair of housings 210 rotatably coupled to be folded about a hinge structure 240 while facing each other. According to an embodiment, the hinge structure 240 may be disposed in the X-axis direction or in the Y-axis direction. According to an embodiment, two or more hinge structures 240 may be disposed to be folded in the same direction or in different directions. For example, the hinge structure 240 may include a first hinge structure (e.g., 240a of FIG. 7A) and a second hinge structure (e.g., 240b of FIG. 7A) disposed to be spaced apart from each other along a folding axis A.

According to an embodiment, the foldable electronic device 200 may include a first display 270 (e.g., a flexible display, a foldable display, or a main display) disposed in an area formed by the pair of housings 210 and 220.

According to an embodiment, the first housing 210 and the second housing 220 are disposed on both sides of the folding axis A and be substantially symmetrical in shape with respect to the folding axis A. According to an embodiment, the first housing 210 and the second housing 220 may form different angles or distances depending on whether the foldable electronic device 200 is in an unfolded state (or flat state), a folded state, or an intermediate state. For example, the unfolded state of the first housing 210 and the second housing 220 may include an operation state in which the folding angle between the first housing 210 and the second housing 220 falls within a first reference range (e.g., about 170 degrees to about 180 degrees). For example, the folded state of the first housing 210 and the second housing 220 may include an operation state in which the folding angle between the first housing 210 and the second housing 220 falls within a second reference range (e.g., about 0 degrees to about 20 degrees). For example, the intermediate state of the first housing 210 and the second housing 220 is an operation state between the unfolded state and folded state of the first housing 210 and the second housing 220 and may include an operation state in which the folding angle between the first housing 210 and the second housing 220 falls within a third reference range (e.g., about 20 degrees to about 170 degrees). As an example, in the intermediate state of the foldable electronic device 300, the first housing 210 and the second housing 220 may maintain an unfolded state at various angles through the hinge structure 240.

According to an embodiment, the pair of housings 210 and 220 includes a first housing 210 (e.g., a first housing structure) coupled to the hinge structure 240 and a second housing 220 (e.g., a second housing structure) coupled to the hinge structure 240.

According to an embodiment, the first housing 210 may include a first surface 211 facing in a first direction (e.g., front direction) (z-axis direction) and a second surface 212 facing in a second direction (e.g., rear direction) (-z-axis direction) opposite to the first surface 211, in the unfolded state.

According to an embodiment, the second housing 220 may include a third surface 221 facing in the first direction (z-axis direction) and a fourth surface 222 facing in the second direction (-z-axis direction), in the unfolded state. For example, the foldable electronic device 200 may be operated in such a manner where in the unfolded state, the first surface 211 of the first housing 210 and the third surface 221 of the second housing 220 face in substantially the same first direction (z-axis direction) and, in the folded state, the first surface 211 (or second surface 212) and the third surface 221 (or fourth surface 222) face each other (e.g., in-folding manner). For example, the foldable electronic device 200 may be operated in such a manner where in the unfolded state, the second surface 212 of the first housing 210 and the fourth surface 222 of the second housing 220 face in substantially the same second direction (-z-axis direction) and, in the folded state, the second surface 212 (or first surface 211) and the fourth surface 222 (or third surface 221) face away from each other. For example, in the folded state, the second surface 212 may face in the first direction (z-axis direction), and the fourth surface 222 may face in the second direction (-z-axis direction).

As an example, the foldable electronic device 200 may be operated in such a manner where in the unfolded state, the first surface 211 of the first housing 210 and the third surface 221 of the second housing 220 face in substantially the same first direction (z-axis direction) and, in the folded state, the first surface 211 and the third surface 221 face away from each other (e.g., out-folding manner). For example, in the folded state, the first surface 211 may face in the first direction (z-axis direction), and the third surface 222 may face in the second direction (-z-axis direction). For example, the foldable electronic device 200 may be operated in such a manner where in the unfolded state, the second surface 212 of the first housing 210 and the fourth surface 222 of the second housing 220 face in substantially the same second direction (-z-axis direction) and, in the folded state, the second surface 212 and the fourth surface 222 face each other.

According to an embodiment, the first housing 210 may include a first side frame 213 at least partially forming the appearance of the foldable electronic device 200 and a first rear cover 214 coupled with the first side frame 213 and forming at least a portion of the second surface 212 of the foldable electronic device 200.

According to an embodiment, the first side frame 213 may include a first surface 213a, a second side surface 213b extending from an end of the first side surface 213a, and a third surface 213c extending from the other end of the first side surface 213a. According to an embodiment, the first side frame 213 may be formed in a rectangular (or square) shape through the first side surface 213a, the second side surface 213b, and the third side surface 213c.

According to an embodiment, the second housing 220 may include a second side frame 223 at least partially forming the appearance of the foldable electronic device 200 and a second rear cover 224 coupled with the second side frame 223 and forming at least a portion of the fourth surface 222 of the foldable electronic device 200.

According to an embodiment, the second side frame 223 may include a fourth side surface 223a, a fifth side surface 223b extending from an end of the fourth side surface 223a, and a sixth side surface 223c extending from the other end of the fourth side surface 223a. According to an embodiment, the second side frame 223 may be formed in a rectangular shape through the fourth side surface 223a, the fifth side surface 223b, and the sixth side surface 223c.

According to an embodiment, the pair of housings 210 and 220 is not limited to the shape and coupling shown but may rather be implemented in other shapes or via a combination and/or coupling of other components. For example, the first side frame 213 may be integrally formed with the first rear cover 214, and the second side frame 223 may be integrally formed with the second rear cover 224.

According to an embodiment, in the unfolded state of the foldable electronic device 200, the second side surface 213b of the first side frame 213 may be connected with the fifth side surface 223b of the second side frame 223. According to an embodiment, in the unfolded state of the foldable electronic device 200, the third side surface 213c of the first side frame 213 may be connected with the sixth side surface 223c of the second side frame 223.

According to an embodiment, the first side frame 213 and/or the second side frame 223 may be formed of metal or may further include a polymer injected into the metal. According to an embodiment, the first side frame 213 and/or the second side frame 223 may include at least one conductive portion 216 and/or 226 electrically segmented through at least one segmenter 3161, 3162, and/or 3261 or 3262 formed of a polymer. For example, the at least one conductive portion 216 and/or 226 may be electrically connected with a wireless communication circuit included in the foldable electronic device 200 and be thus used as an antenna operating in at least one designated band (e.g., frequency band).

According to an embodiment, the first rear cover 214 and/or the second rear cover 224 may be formed of at least one of, or a combination of at least two of, laminated or colored glass, ceramic, polymer, or metal (e.g., aluminum, stainless steel (STS), or magnesium).

According to an embodiment, the first display 270 may be disposed from the first surface 211 of the first housing 210 across the hinge structure 240 up to at least a portion of the third surface 221 of the second housing 220.

According to an embodiment, the first display 270 may include a first area 230a substantially corresponding to the first surface 211, a second area 230b corresponding to the second surface 221, and a folding area 230c connecting the first area 230a and the second area 230b and corresponding to the hinge structure 240. For example, in the unfolded state (e.g., the state of FIG. 2A) of the foldable electronic device 200, the first area 230a, the folding area 230c, and the second area 230b of the first display 270 may form substantially the same plane and be arranged to face in the same direction. For example, in the folded state (e.g., the state of FIG. 2D) of the foldable electronic device 200, the first area 230a and the second area 230b of the first display 270 may be disposed to face each other while forming a narrow angle (e.g., about 0 degrees to about 10 degrees) through the folding area 230c. As an example, at least a portion of the folding area 230c may be formed as a curve having a predetermined curvature. For example, in the intermediate state of the foldable electronic device 200, the first area 230a and the second area 230b may form an angle that is larger than that in the folded state and smaller than that in the unfolded state, and the curvature of the folding area 230c may be smaller than that in the folded state. According to an embodiment, the first housing 210 and the second housing 220 may form an angle at which they may be stopped at a designated folding angle between the folded state and the unfolded state, through the hinge structure 240 (e.g., free stop function).

According to an embodiment, the foldable electronic device 200 may include a first protective cover 215 (e.g., first protective frame or first decoration member) coupled along the edge of the first housing 210. According to an embodiment, the foldable electronic device 200 may include a second protective cover 225 (e.g., second protective frame or second decoration member) coupled along the edge of the second housing 220. According to an embodiment, the first protective cover 215 and/or the second protective cover 225 may be formed of a metal or polymer material. According to an embodiment, the first protective cover 215 and/or the second protective cover 225 may be used as a decoration member.

According to an embodiment, the first display 270 may be positioned such that an edge of the first area 230a is interposed between the first housing 210 and the first protective cover 215. According to an embodiment, the first display 270 may be positioned such that an edge of the second area 230b is interposed between the second housing 220 and the second protective cover 225.

According to an embodiment, the first display 270 may be positioned such that the edge of the first display 270 corresponding to a protective cap 235 is protected through the protective cap 235 disposed in the area corresponding to the hinge structure 240. Accordingly, the edge of the first display 270 may be substantially protected from the outside.

According to an embodiment, the foldable electronic device 200 includes a hinge housing 241 (e.g., hinge cover) that may support the hinge structure 240 and may be disposed to be exposed to the outside when the foldable electronic device 200 is in the folded state while being drawn in a first space (e.g., the internal space of the first housing 210) and second space (e.g., the internal space of the second housing 220) in the unfolded state of the foldable electronic device 200 not to be seen from the outside.

According to an embodiment, the foldable electronic device 200 may include a second display 231 (e.g., a sub display) disposed separately from the first display 270. According to an embodiment, the second display 231 may be disposed to be exposed through the whole or at least part of the second surface 212 of the first housing 210. According to an embodiment, in the folded state of the foldable electronic device 200, the second display 231 may display the state information about the foldable electronic device 200 instead of the display function of the first display 270. According to an embodiment, the second display 231 may be disposed to be exposed to the outside through the whole area or at least a partial area of the first rear cover 214. In an embodiment, the second display 231 may be disposed on the fourth surface 222 of the second housing 220. In this case, the second display 231 may be disposed to be exposed to the outside through the whole area or at least a partial area of the second rear cover 224.

According to an embodiment, the foldable electronic device 200 may include at least one of an input device 203 (e.g., microphone), sound output devices 201 and 202, a sensor module 204, camera modules 205, 208, and 209, a key input device 206, or a connector port 207. In the illustrated embodiment, the input device 203 (e.g., microphone), sound output devices 201 and 202, sensor module 204, camera modules 205, 208 and 209, key input device 206, or connector port 207 refer to a hole or shape formed in the first housing 210 or the second housing 220, but may be defined to include a substantial electronic component (e.g., the input device 203, the sound output devices 201 and 202, the sensor module 204, or the camera modules 205, 208, and 209) operating through the hole or shape and disposed in the foldable electronic device 200.

According to an embodiment, the camera modules 205, 208, and 209 may include a first camera device 205 disposed on the first surface 211 of the first housing 210 of the foldable electronic device 200, a second camera device 208 disposed on the second surface 212 of the first housing 310 and/or a flash 209. For example, the second camera device 208 may include a plurality of camera devices having different angles of view. For example, the second camera device 208 may include at least one of a wide-angle camera, an ultra-wide-angle camera, or a telephoto camera.

According to an embodiment, some camera module (e.g., the first camera device 205) of the camera modules 205 and 208 or the sensor module 204 may be disposed to be exposed through the first display 270. For example, the first camera device 205 or the sensor module 204 may be disposed to contact the external environment through an opening (e.g., through hole) at least partially formed in the first display 270, in the internal space of the foldable electronic device 200. In an embodiment, some sensor module 204 may be disposed to perform its functions without being visually exposed through the first display 270 in the internal space of the foldable electronic device 200. In this case, for example, the area facing the sensor module of the first display 270 may need no opening.

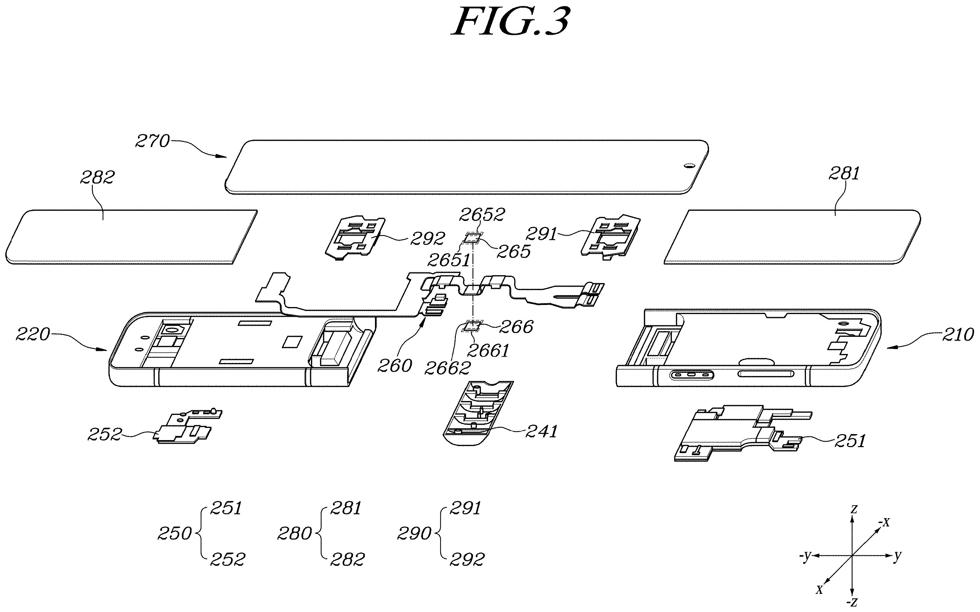

FIG. 3 is an exploded perspective view illustrating a partial configuration of a foldable electronic device 200 (e.g., the foldable electronic device 200 of FIG. 2A) according to an embodiment of the disclosure.

Referring to FIG. 3, in an embodiment, a foldable electronic device (e.g., the foldable electronic device 200 of FIG. 2A) include a first housing 210, a second housing 220, a hinge housing 241, a flexible printed circuit board (FPCB) 260 and reinforcement portions 265 and 266. The foldable electronic device 200 may further include a printed circuit board (PCB) 250, a first display 270, a display plate 280, or an FPCB plate 290.

According to an embodiment, components for implementing various functions of the foldable electronic device 200 may be separately disposed on the printed circuit board 250. According to an embodiment, the printed circuit board (PCB) 250 may include a first printed circuit board (e.g., main PCB) 251 or a second printed circuit board (e.g., sub PCB) 252. According to an embodiment, the main PCB 251 may be disposed in the space formed by the first housing 210. According to an embodiment, the sub PCB 252 may be disposed in the space formed by the second housing 220. According to an embodiment, at least a portion of the FPCB 260 may be disposed in the first housing 210, the second housing 220, or the hinge housing 241.

According to an embodiment, the FPCB 260 may connect the main PCB 251 and the sub PCB 252. For example, an end of the FPCB 260 may be electrically connected with the main PCB 251, and the other end thereof may be electrically connected with the sub PCB 252. According to an embodiment, the FPCB 260 may be provided to have flexibility. For example, the FPCB 260 may be operated to be folded according to the folding of the foldable electronic device 200, and be operated to be unfolded according to the unfolding of the foldable electronic device 200. According to an embodiment, at least one or more FPCBs 260 may be provided. For example, although not shown, the FPCB 260 may further include a sub FPCB (not shown).

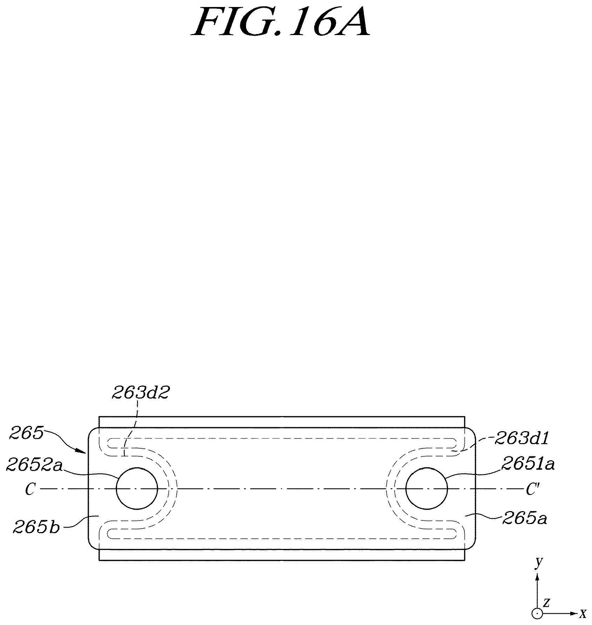

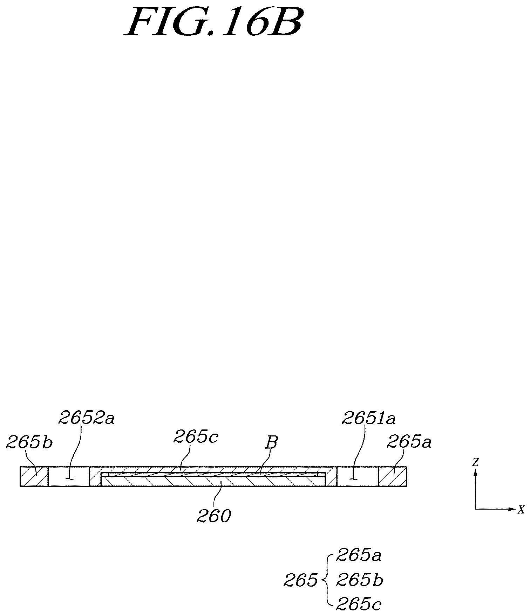

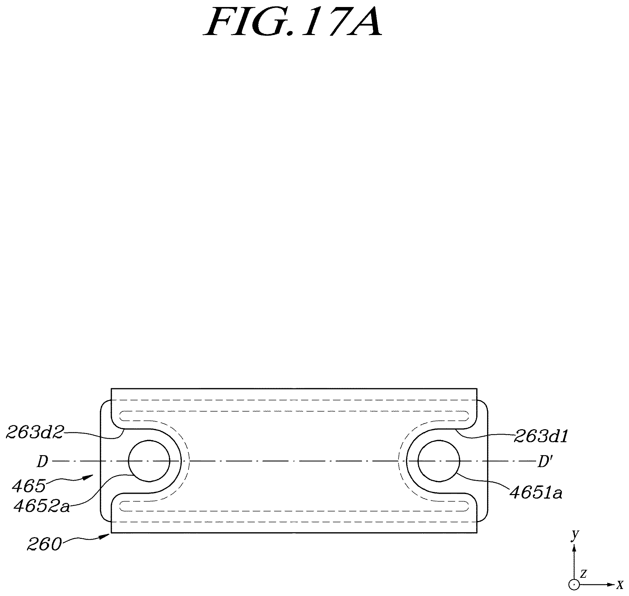

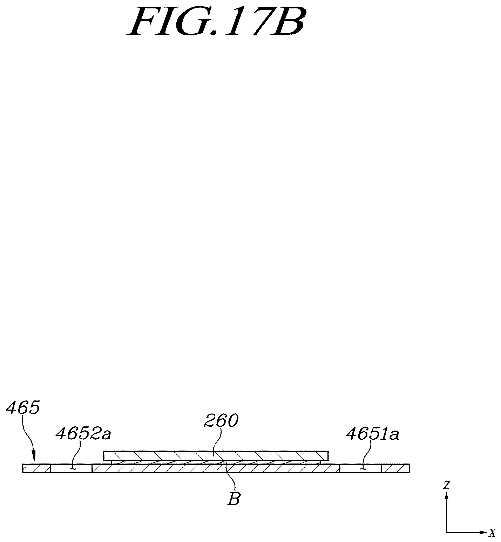

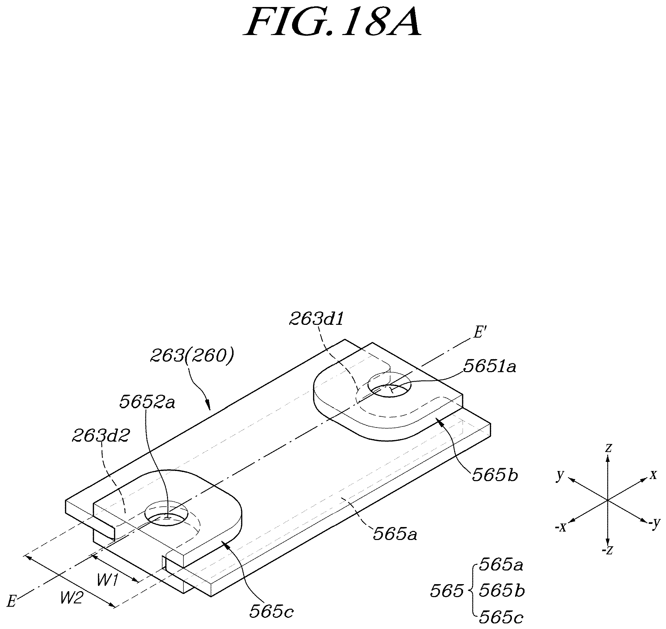

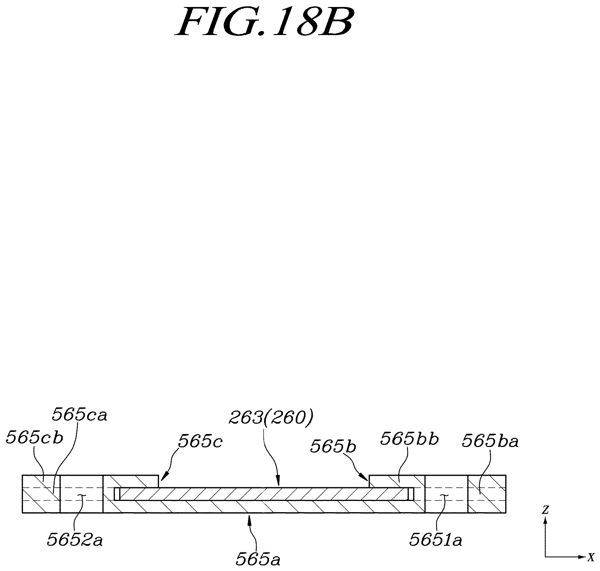

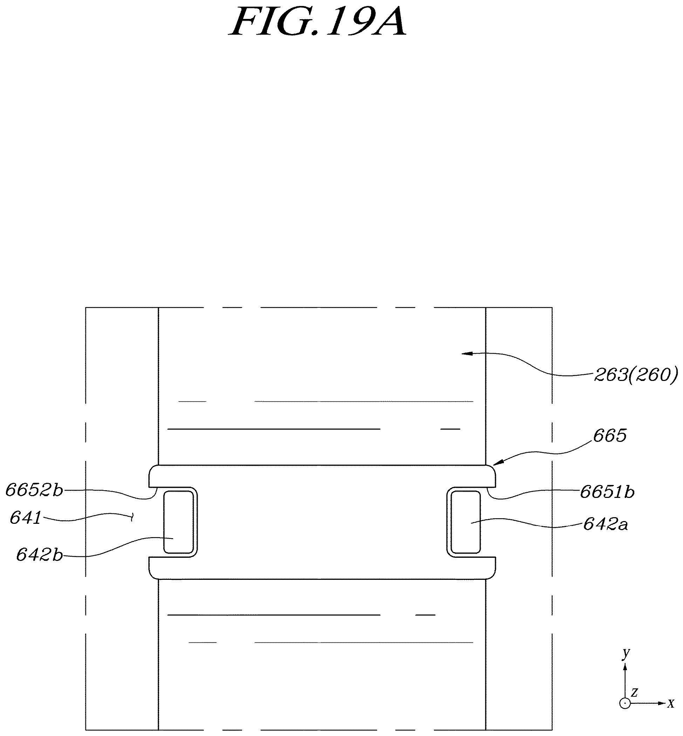

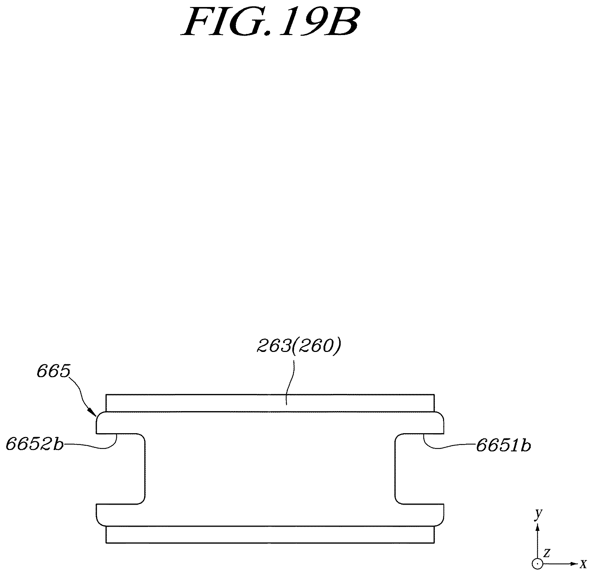

According to an embodiment, the reinforcement portions 265 and 266 are coupled to the FPCB 260 to prevent an asymmetrical shape in the FPCB 260 when the FPCB 260 is unfolded or folded according to the unfolding or folding of the foldable electronic device 200. According to an embodiment, the reinforcement portions 265 and 266 may include a first reinforcement portion 265 or a second reinforcement portion 266. For example, the first reinforcement portion 265 may be coupled to an upper side of the FPCB 260. For example, the second reinforcement portion 266 may be coupled to a lower side of the FPCB 260. According to an embodiment, the foldable electronic device 200 may include at least one of a first reinforcement portion 265 (e.g., the reinforcement portion 265 of FIG. 16, the reinforcement portion 565 of FIG. 18, or the reinforcement portion 665 of FIG. 19) or a second reinforcement portion 266 (e.g., the reinforcement portion 465 of FIG. 17). According to an embodiment, the reinforcement portions 265 and 266 include guide portions 2651, 2652, 2661, and 2662 for guiding vertical movement of the FPCB 260 when the foldable electronic device 200 is unfolded or folded. For example, the first reinforcement portion 265 may include a first guide portion 2651 formed at an end of the first reinforcement portion 265 or a second guide portion 2652 formed at the other end of the first reinforcement portion 265. For example, the second reinforcement portion 266 may include a third guide portion 2661 formed at an end of the second reinforcement portion 266 or a fourth guide portion 2662 formed at the other end of the second reinforcement portion 266. According to an embodiment, the guide portions 2651 and 2652 may have a hole-type structure (e.g., the holes 2651a and 2652a of FIG. 16, the holes 4651a and 4652a of FIG. 17 or the holes 5651a and 5652a of FIG. 18) or an open-type structure (e.g., the guide ribs 6651b and 6652b of FIG. 19). Hereinafter, a specific embodiment of the reinforcement portion 265 is described below.

According to an embodiment, the display plate 280 may be provided to protect the rear surface of the first display 270. According to an embodiment, the display plate 280 may be positioned on the rear surface of the first display 270. According to an embodiment, the display plate 280 may include a first display plate 281 to cover a first rear area (not shown) of the first display 270 facing the first area (e.g., the first area 230a of FIG. 2B) of the first display 270 and a second display plate 282 to cover a second rear area (not shown) of the first display 270 facing the second area (e.g., the second area 230b of FIG. 2B) of the first display 270. According to an embodiment, the first display plate 281 may extend from one end of the first display 270 to the folding area (e.g., the folding area 230c of FIG. 2C) of the first display 270. According to an embodiment, the second display plate 282 may extend from the other end of the first display 270 to the folding area 230c of the first display 270.

According to an embodiment, the FPCB plate 290 may be provided to cover at least a portion of the FPCB 260. According to an embodiment, the FPCB plate 290 may include a first FPCB plate 291 and a second FPCB plate 292. According to an embodiment, the first FPCB plate 291 may be disposed on an upper surface of the FPCB 260. The first FPCB plate 291 may be provided so that one side of the FPCB 260 is fixed to the first housing 210. According to an embodiment, the second FPCB plate 292 may be disposed on an upper surface of the FPCB 260. The second FPCB plate 292 may be provided so that the other side of the FPCB 260 is fixed to the second housing 220.

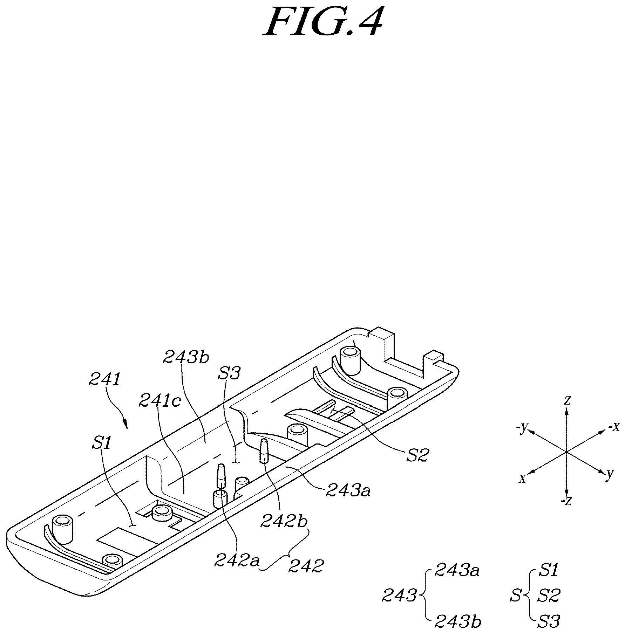

FIG. 4 is a perspective view illustrating a hinge housing (e.g., the hinge housing 241 of FIG. 3) according to an embodiment of the disclosure.

Referring to FIG. 4, in an embodiment, the hinge housing (e.g., the hinge housing 241 of FIG. 3) may form an internal space S to receive at least a portion of the hinge structure (e.g., the first hinge 240 of FIG. 7 and/or the FPCB (e.g., the FPCB 260 of FIG. 3)).

According to an embodiment, when the foldable electronic device 200 includes two hinge structures 240, the internal space S of the hinge housing 241 may include a first internal space S1 to receive any one hinge structure 240 (e.g., the first hinge structure 240a of FIG. 7), a second internal space S2 to receive the other hinge structure 240 (e.g., the second hinge structure 240b of FIG. 7), and a third internal space S3 to receive at least a portion of the FPCB 260.

According to an embodiment, the hinge housing 241 includes at least one pair of guide protrusions 242 protruding from the inner surface upward (e.g., z direction). The pair of guide protrusions 242 may be shaped as circular protrusions or rectangular protrusions, but the shape and/or number of the guide protrusions 242 may be limited thereto. The pair of guide protrusions 242 may be formed of metal through CNC machining, but the material and/or forming method for the guide protrusions 242 is not limited thereto. The pair of guide protrusions 242 may be formed in a central portion 241c of the hinge housing 241. The pair of guide protrusions 242 may include a first guide protrusion 242a and a second guide protrusion 242b spaced apart from each other along the length direction (e.g., ±x direction) of the hinge housing 241.

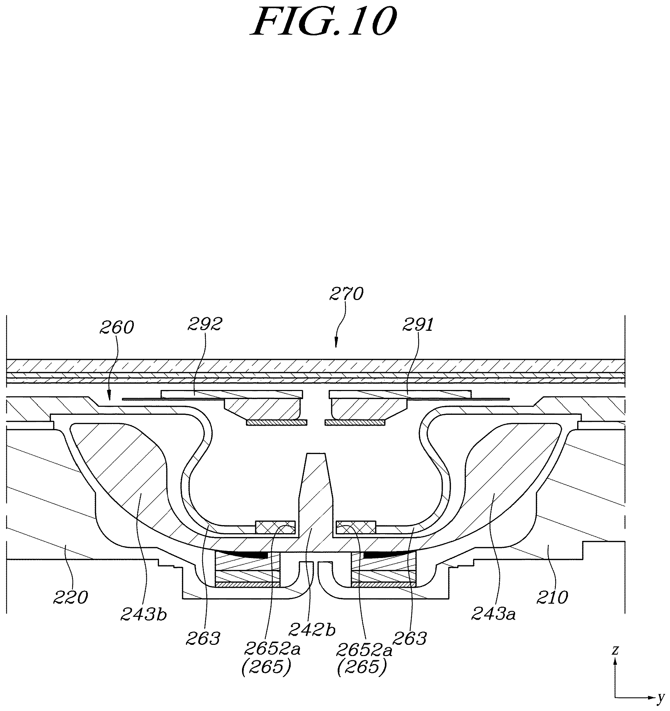

According to an embodiment, the hinge housing 241 may include a pair of protrusions 243 protruding from two opposite ends of the hinge housing 241 to the FPCB 260. According to an embodiment, the pair of protrusions 243 may be formed on two opposite ends of the central portion 241c of the hinge housing 241. The pair of protrusions 243 may be formed to be symmetrical with each other with the pair of guide protrusions 242 disposed therebetween. According to an embodiment, the pair of protrusions 243 may include a 2-1th protrusion (e.g., the 2-1th protrusion 243a of FIG. 10) or a 2-2th protrusion (e.g., the 2-2th protrusion 243b of FIG. 10). According to an embodiment, the 2-1th protrusion 243a may protrude from one side end of the hinge housing 241. According to an embodiment, the 2-2th protrusion 243b may protrude from the other end of the hinge housing 241.

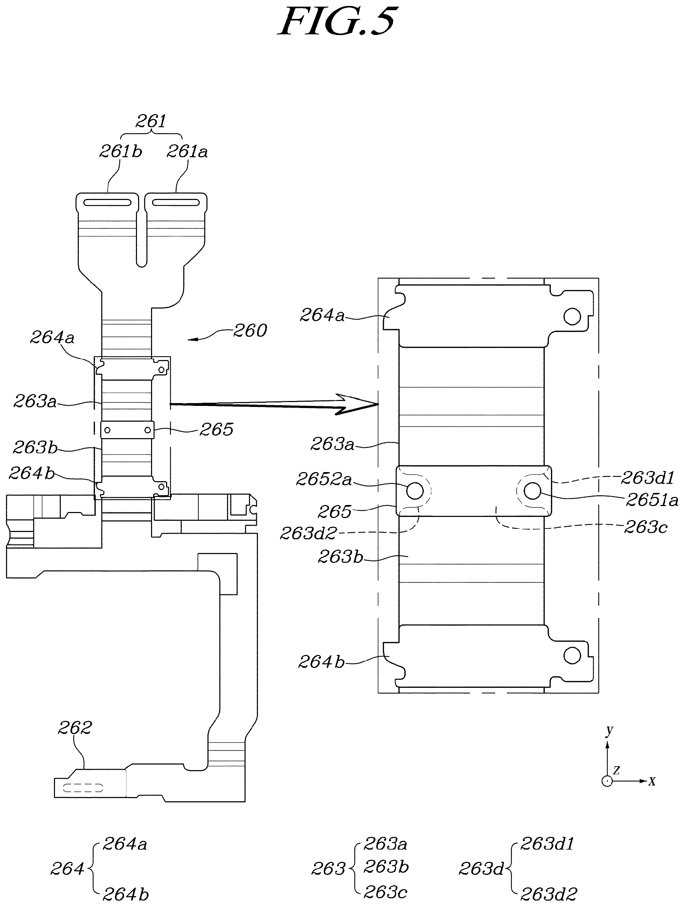

FIG. 5 is an exploded view illustrating a flexible printed circuit board (e.g., the FPCB 260 of FIG. 3) to which a reinforcement portion (e.g., the reinforcement portion 265 of FIG. 3) is coupled, according to an embodiment of the disclosure.

Referring to FIG. 5, in an embodiment, the FPCB (e.g., the FPCB 260 of FIG. 3) may include connectors 261 and 262 to electrically connect the PCB (e.g., the PCB 250 of FIG. 3) and the FPCB 260. For example, the FPCB 260 may include a first connector 261a and 261b provided at one end of the FPCB 260 and electrically connect the FPCB 260 and the main PCB (e.g., the main PCB 251 of FIG. 3). For example, the FPCB 260 may include a second connector 262 provided at the other end of the FPCB 260 and electrically connect the FPCB 260 and the sub PCB (e.g., the sub PCB 252 of FIG. 3).

According to an embodiment, the FPCB 260 may include a flex portion 263 provided to be moved in the hinge housing (e.g., the hinge housing 241 of FIG. 3) when the foldable electronic device (e.g., the foldable electronic device 200 of FIG. 2) is unfolded or folded. According to an embodiment, the flex portion 263 may include a first bending portion 263a, a second bending portion 263b, and a third bending portion 263c (or central portion). According to an embodiment, in the central portion 263c of the flex portion 263, a cutout 263d having a shape corresponding to the guide portion (e.g., the first guide 2651 or second guide 2652 of FIG. 3) of the reinforcement portion 265 may be provided. For example, the cutout 263d may be formed by being cut from the central portion 263c of the flex portion 263 to the inside to allow the guide protrusion (e.g., the guide protrusion 242 of FIG. 4) to pass therethrough. According to an embodiment, the cutout 263d may include a first cutout 263d1 to allow the first guide protrusion (e.g., the first guide protrusion 242a of FIG. 4) to pass therethrough or a second cutout 263d2 to allow the second guide protrusion (e.g., the second guide protrusion 242b of FIG. 4) to pass therethrough. According to an embodiment, when the horizontal width (e.g., ±x direction) of the reinforcement portion 265 is larger than the horizontal width of the central portion 263c, the guide portions 2651 and 2652 of the reinforcement portion 265 may be formed off and outside the central portion 263c in which case the cutout 263d of the central portion 263c may be unnecessary.

According to an embodiment, the FPCB 260 may include a rigid portion 264 to fix the FPCB 260 to the housing (e.g., the first housing 210 or second housing 220 of FIG. 3). The rigid portion 264 may include a first rigid portion 264a disposed on the first bending portion 263a of the flex portion 263 and a second rigid portion 264b disposed on the second bending portion 263b of the flex portion 263. According to an embodiment, the first rigid portion 264a may fix one end of the FPCB 260 to the first housing 210. According to an embodiment, the second rigid portion 264b may fix the other end of the FPCB 260 to the second housing 220.

According to an embodiment, the reinforcement portion 265 may be positioned between the first rigid portion 264a and the second rigid portion 264b. According to an embodiment, the reinforcement portion 265 may be coupled to the central portion 263c of the flex portion 263. According to an embodiment, the reinforcement portion 265 includes guide portions (e.g., the guide portions 2651 and 2652 of FIG. 3) to guide the vertical movement of the FPCB 260 along the pair of guide protrusions (e.g., the pair of guide protrusions 242a and 242b of FIG. 4). According to an embodiment, the guide portions 2651 and 2652 may be provided in a hole-type structure. For example, a first hole 2651a through which the first guide protrusion 242a passes may be formed in the first guide portion 2651. For example, a second hole 2652a through which the second guide protrusion 252b passes may be formed in the second guide portion 2652.

According to an embodiment, when the foldable electronic device 200 is folded or unfolded, the reinforcement portion 265 may perform an up-and-down linear motion while repeatedly contacting the pair of guide protrusions 242 of the hinge housing 241. To respond to friction due to the contact, the reinforcement portion 265 may be formed of a material that is resistant to friction or a material that does not cause frictional noise. For example, the reinforcement portion 265 may be formed of a poly carbonate (PC) or poly oxy methylene (POM) material.

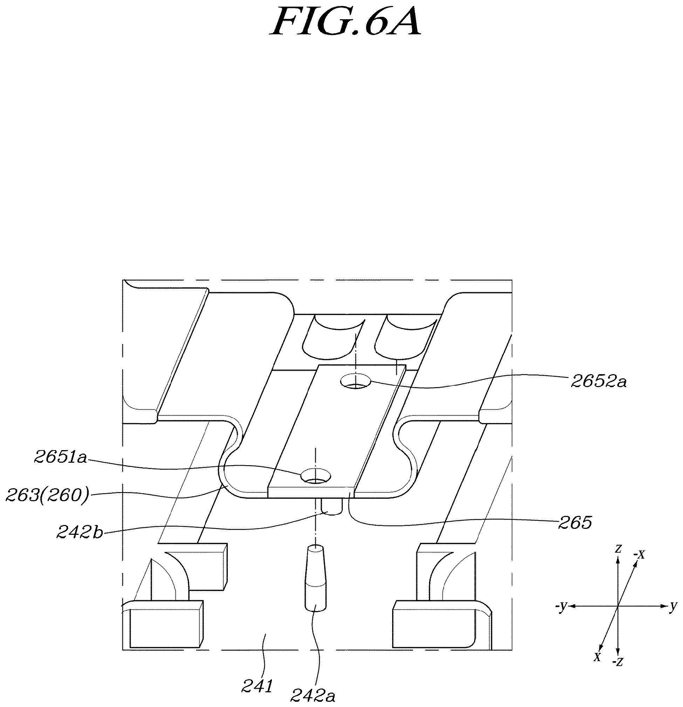

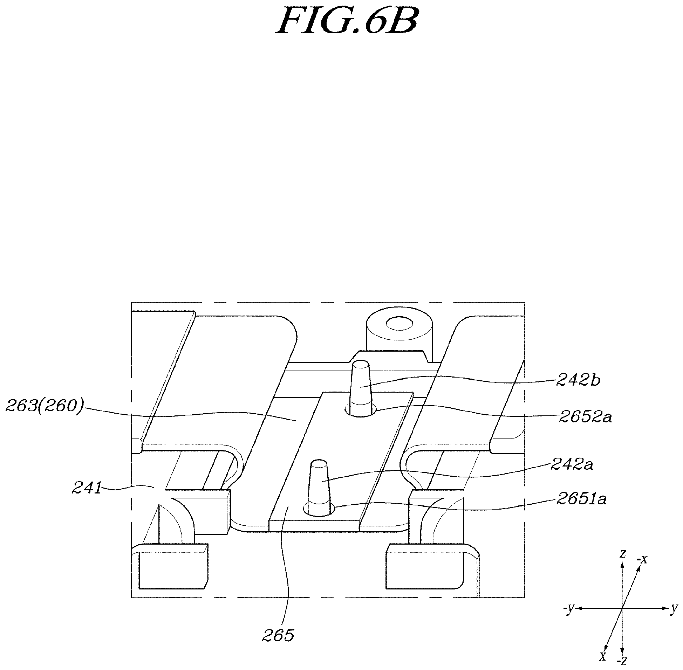

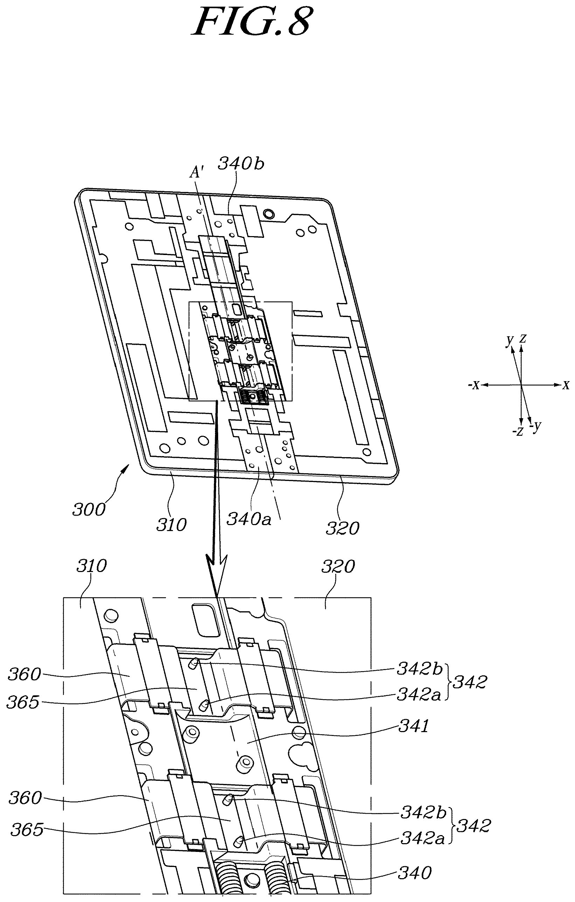

FIG. 6A is a view illustrating a state in which an FPCB (e.g., the FPCB 260 of FIG. 3) and a hinge housing (e.g., the hinge housing 241 of FIG. 3) are separated according to an embodiment of the disclosure. FIG. 6B is a view illustrating a state in which an FPCB (e.g., the FPCB 260 of FIG. 3) and a hinge housing (e.g., the hinge housing 241 of FIG. 4) are coupled according to an embodiment of the disclosure. FIG. 7 is a view illustrating an unfolded state of a foldable electronic device (e.g., the foldable electronic device 200 of FIG. 2) according to an embodiment of the disclosure. FIG. 8 is a view illustrating an unfolded state of a foldable electronic device (e.g., the foldable electronic device 200 of FIG. 2) according to an embodiment of the disclosure.

Referring to FIGS. 6A and 6B, in an embodiment, when the foldable electronic device (e.g., the foldable electronic device 200 of FIG. 2) is assembled, the pair of guide protrusions 242 formed in the hinge housing 241 may be inserted through the pair of holes 2651a and 2652a of the reinforcement portion 265. Accordingly, when the foldable electronic device 200 is folded or unfolded, the FPCB 260 and the reinforcement portion 265 may be vertically moved along the pair of guide protrusions 242, preventing an asymmetrical shape in the FPCB 260. A specific embodiment of the motion of the FPCB 260 according to the unfolding or folding of the foldable electronic device 200 is described below.

Referring to FIG. 7, in an embodiment, the foldable electronic device 200 (e.g., a vertical foldable electronic device) may be folded or unfolded about the folding axis A in the length direction (e.g., vertical direction) of the housings 210 and 220. According to an embodiment, the foldable electronic device 200 may have one FPCB 260, and the FPCB 260 may be prevented from a substantial asymmetrical shape when the foldable electronic device 200 is folded or unfolded, by one pair of guide protrusions 242a and 242b and the reinforcement portion 265.

Referring to FIG. 8, in an embodiment, the foldable electronic device 300 (e.g., a horizontal foldable electronic device) includes a pair of housings 310 and 320, a hinge structure 340, a hinge housing 341, an FPCB 360, or a reinforcement portion 365. In an embodiment, the foldable electronic device 300 may be folded or unfolded about the folding axis A' in the width direction (e.g., horizontal direction) of the housings 310 and 320.

In an embodiment, the pair of housings 310 and 320 may be rotatably coupled to be folded to face each other about the hinge structure 340. In an embodiment, two or more hinge structures which are to be folded in the same direction or different directions may be disposed, but embodiments of the disclosure are not limited thereto. For example, the hinge structure 340 may include a third hinge structure 340a and a fourth hinge structure 340b, and the first hinge structure 340a and the second hinge structure 340b may be spaced apart from each other along the folding axis A'.

In an embodiment, the hinge structure 341 may be positioned between the pair of housings 310 and 320 to receive at least a portion of the hinge structure 340 or the FPCB 360.

According to an embodiment, the hinge structure 341 may include at least one pair of protrusions 342 having the same structure as the pair of protrusions (e.g., the pair of protrusions 242 of FIG. 4) according to the above-described embodiment. In an embodiment, the FPCB 360 may have the same structure as the FPCB (e.g., the FPCB 260 of FIG. 3) according to the above-described embodiment. In an embodiment, the reinforcement portion 365 may at least partially have the same structure as the reinforcement portion (e.g., the reinforcement portion 265 of FIG. 3) according to the above-described embodiment.

Accordingly, when the foldable electronic device 300 is folded or unfolded, the FPCB 360 may be prevented from an asymmetrical shape by the reinforcement portion 365 and at least one pair of guide protrusions 342. For example, when the foldable electronic device 300 includes a plurality of FPCBs 360, the plurality of FPCBs 360 and several pairs of guide protrusions 342 may be disposed to be spaced apart from each other along the length direction (e.g., the folding axis A' direction) of the hinge housing 341, and the plurality of FPCBs 360 may be prevented from an asymmetrical shape when the foldable electronic device 300 is folded or unfolded, by the pair of guide protrusions 342 respectively corresponding to the reinforcement portions 365.

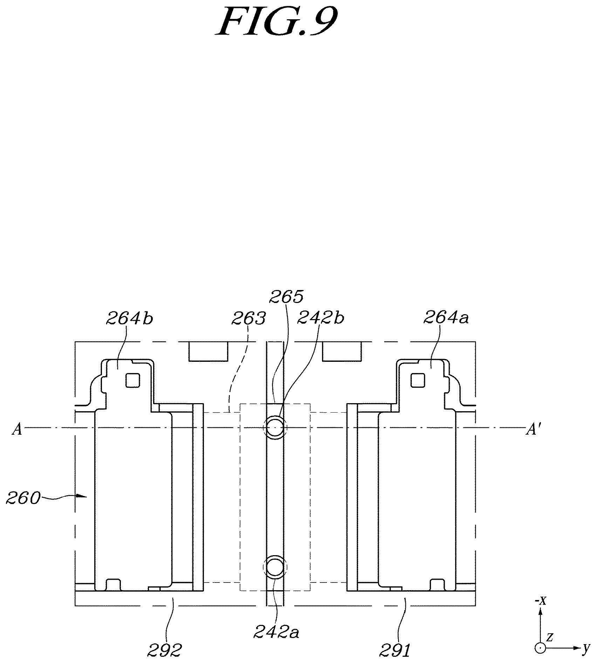

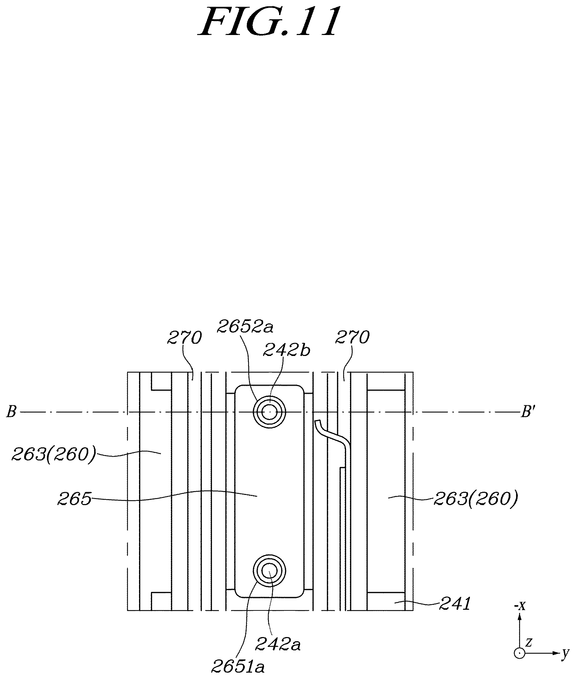

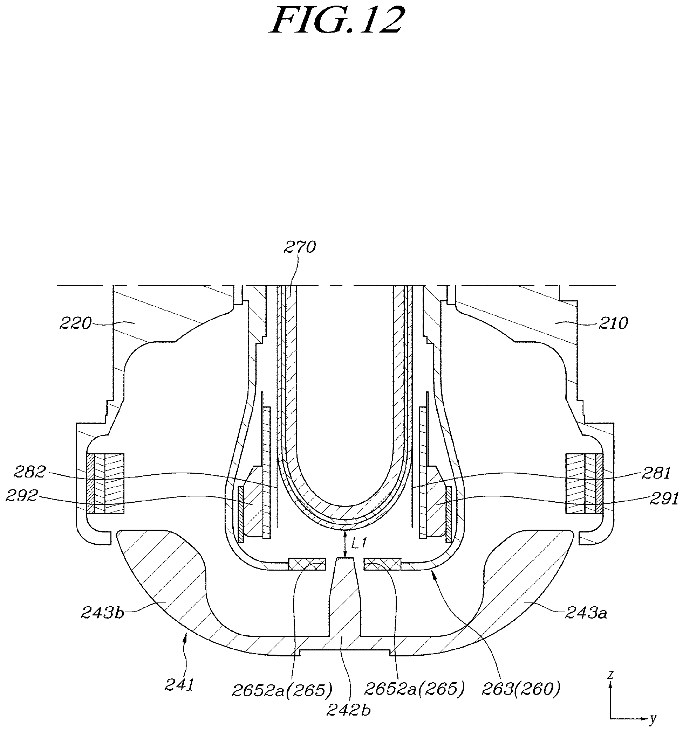

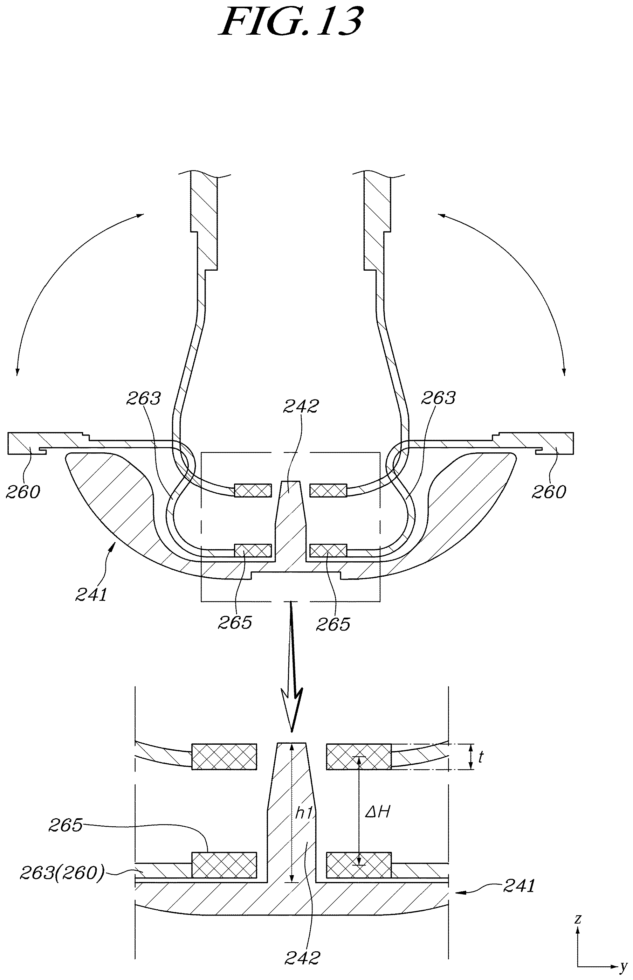

FIG. 9 is a plan view illustrating an unfolded state of a foldable electronic device (e.g., the foldable electronic device 200 of FIG. 2) according to an embodiment of the disclosure. FIG. 10 is a cross-sectional view of the foldable electronic device (e.g., the foldable electronic device 200 of FIG. 2), taken along line A-A' of FIG. 9 according to an embodiment of the disclosure. FIG. 11 is a plan view illustrating a folded state of a foldable electronic device (e.g., the foldable electronic device 200 of FIG. 2) according to an embodiment of the disclosure. FIG. 12 is a cross-sectional view of the foldable electronic device (e.g., the foldable electronic device 200 of FIG. 2), taken along line B-B' of FIG. 11 according to an embodiment of the disclosure. FIG. 13 is a cross-sectional view illustrating operations of an FPCB (FPCB 260 of FIG. 3) between the unfolded state and folded state of the foldable electronic device (the foldable electronic device 200 of FIG. 2) according to an embodiment.

Referring to FIGS. 9 and 10, in the unfolded state of the foldable electronic device (e.g., the foldable electronic device 200 of FIG. 2) according to an embodiment, the flex portion 263 of the FPCB 260 has a folded shape and may be received in the hinge housing 241. In an embodiment, in the unfolded state of the foldable electronic device 200, the flex portion 263 of the FPCB 260 may be moved downward along the guide protrusions 242a and 242b inserted into the holes 2651a and 2652a formed in the guide portions (e.g., 2651 and 2652 of FIG. 3) of the reinforcement portion 265 and be thus disposed to contact or abut the lower surface of the hinge housing 241.

Referring to FIGS. 11 and 12, in the folded state of the foldable electronic device 200 according to an embodiment, the flex portion 263 of the FPCB has a shape in which it is partially unfolded and may be spaced apart from the hinge housing 241 by a predetermined gap. In an embodiment, in the folded state of the foldable electronic device 200, the flex portion 263 of the FPCB 260 may be moved upward along the guide protrusions 242a and 242b inserted into the holes 2651a and 2652a formed in the guide portions (e.g., 2651 and 2652 of FIG. 3) of the reinforcement portion 265 and be thus spaced apart from the lower surface of the hinge housing 241 by a predetermined gap.

Referring to FIG. 13, in an embodiment, the FPCB 260 may be unfolded or folded according to the unfolding or folding of the foldable electronic device 200. For example, at least a portion of the flex portion 263 of the FPCB 260 may be folded in the unfolded state of the foldable electronic device 200. For example, at least a portion of the flex portion 263 of the FPCB 260 may be unfolded in the folded state of the foldable electronic device 200. In an embodiment, when the foldable electronic device 200 is unfolded or folded, the FPCB 260 or the reinforcement portion 265 may be moved in upper and lower directions along the guide protrusion 242. Accordingly, when the foldable electronic device 200 is in an unfolded or folded state, movement of the FPCB 260 in the left and right directions may be restricted, preventing an asymmetrical shape in the FPCB 260.

In an embodiment, the vertical movement ΔH of the FPCB 260 or reinforcement portion 265 increases as the inner depth of the hinge housing 241 increases, or the distance between the FPCB 260 and the first display 270 increases. In an embodiment, the vertical movement ΔH of the FPCB 260 or reinforcement portion 265 may be smaller than the height h1 of the guide protrusion 242. For example, the height h1 of the guide protrusion 242 is equal to or larger than the sum of the vertical movement ΔH of the FPCB 260 or the reinforcement portion 265 and the thickness t of the reinforcement portion 265.

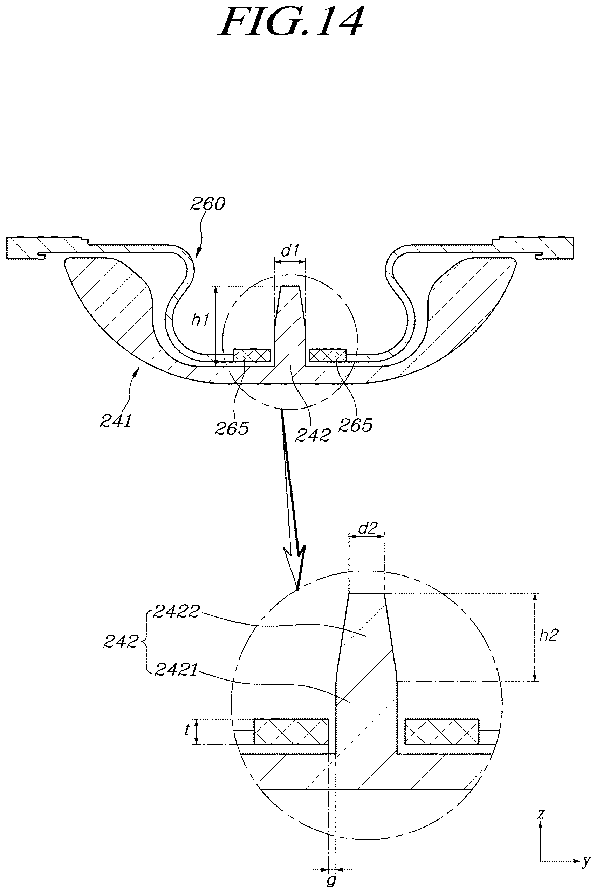

FIG. 14 is a cross-sectional view illustrating a hinge housing (e.g., the hinge housing 241 of FIG. 3) and an FPCB (e.g., the FPCB 260 of FIG. 3) in an unfolded state of a foldable electronic device (e.g., the foldable electronic device 200 of FIG. 2) according to an embodiment.

Referring to FIG. 14, in an embodiment, the guide protrusion 242 of the hinge housing 241 may include a body portion 2421 and a chamfered portion 2422. In an embodiment, the body portion 2421 may protrude and extend upward from the inner surface of the hinge housing 241. In an embodiment, the chamfered portion 2422 may extend upward from the body portion 2421 and may be formed to have its diameter gradually decrease upward.

According to an embodiment, the height h1 of the guide protrusion 242 may be set considering the position (or height) of the reinforcement portion 265 in the folded state of the foldable electronic device 200 and be set to secure a sufficient distance to the first display 270. For example, the height h1 of the guide protrusion 242 may be set to 2.5 mm or more (e.g., 2.6 mm). According to an embodiment, the diameter d1 of the guide protrusion 242 may be set considering rigidity, and may be set to 0.8 mm or more (e.g., 1.0 mm) for the formation of the chamfered portion 2422. According to an embodiment, the diameter d2 of the chamfered portion 2422 may be set considering the diameter d1 of the guide protrusion 242. For example, when the diameter d1 of the guide protrusion 242 is 1.0 mm, the diameter d2 of the chamfered portion 2422 may be set to 0.8 mm. According to an embodiment, the height h2 of the chamfered portion 2422 may be set considering the height h1 of the guide protrusion 242 and may be set within about 1.4 mm to 1.8 mm not to be stuck when the reinforcement portion 265 moves up and down. According to an embodiment, the thickness t of the reinforcement portion 265 may be set to differ depending on the material and may be set to, e.g., 0.5 mm. According to various embodiments, a preferred thickness t of the reinforcement portion 265 may range between 0.2mm and 0.8mm. According to an embodiment, the gap g between the guide portion 2651 of the reinforcement portion 265 and the guide protrusion 242 may be set to fall within about 0.05mm to about 0.10mm to minimize friction with the guide protrusion 242 when the reinforcement portion 265 moves up and down.

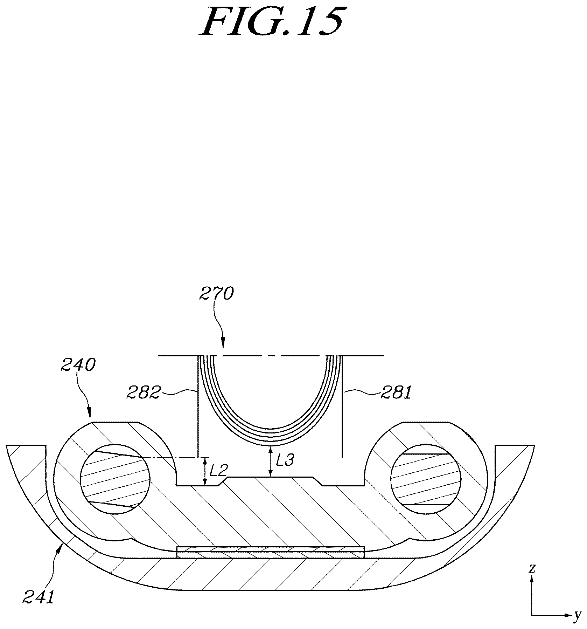

FIG. 15 is a cross-sectional view of the foldable electronic device (e.g., the foldable electronic device 200 of FIG. 2), taken along line I-I' of FIG. 2D according to an embodiment.

Referring to FIG. 15, in an embodiment, in the folded state of the foldable electronic device (e.g., the foldable electronic device 200 of FIG. 2), the gap L2 between the display plate 281 and 282 and the hinge structure 240 may be set to be smaller than the gap L3 between the first display 270 and the hinge structure 240. Accordingly, although the movement of the first display 270 due to a fall or impact of the foldable electronic device 200 is larger than the gap L3 between the first display 270 and the hinge structure 240, the display plate 281 and 282 may contact the hinge structure 240 earlier than the first display 270 and thus play a role as a stopper to the movement of the first display 270. As an example, in the folded state of the foldable electronic device 200, the gap L2 between the display plate 281 and 282 and the hinge structure 240 may be set to about 0.6mm. As an example, the gap L3 between the first display 270 and the hinge structure 240 may be set to about 0.787mm. According to various embodiments, a preferred gap L2 between the display plate 281 and 282 and the hinge structure 240 may range between 0.4mm and 1mm. According to various embodiments, a preferred gap L3 between the first display 270 and the hinge structure 240 may range 0.5mm to 1mm.

Referring to FIGS. 12 and 15, in the folded state of the foldable electronic device 200, the gap L1 between the first display 270 and the guide protrusion 242 may be set to about 0.80mm to secure reliability against a fall or impact, like the gap L2 between the hinge structure 240 and the display plate 281 and 282. According to various embodiments, a preferred gap L1 between the first display 270 and the guide protrusion 242 may range 0.5mm to 1mm.

FIG. 16A is a plan view illustrating an embodiment (first embodiment) of a reinforcement portion (e.g., the first reinforcement portion 265 of FIG. 3) coupled with an FPCB (e.g., the FPCB 260 of FIG. 3) according to an embodiment. FIG. 16B is a cross-sectional view taken along line C-C' of FIG. 16A according to an embodiment.

Referring to FIGS. 16A and 16B, in an embodiment, the reinforcement portion 265 of the FPCB 260 may be provided to surround at least a portion of an upper surface or side surface of the flex portion 263 of the FPCB 260. According to an embodiment, the reinforcement portion 265 may include a first part 265a, a second part 265b, or a third part 265c.

According to an embodiment, the first part 265a may include a first guide portion (e.g., the first guide portion 2651 of FIG. 3) formed with a hole 2652a penetrated by the first guide protrusion (e.g., the first guide protrusion 242a of FIG. 4). According to an embodiment, at least a portion of the first part 265a may be fitted into the first cutout 263d1 of the flex portion 263. For example, at least a portion of the first part 265a may be provided in a shape corresponding to the first cutout 263d1.

According to an embodiment, the second part 265b may include a second guide portion (e.g., the second guide portion 2652 of FIG. 3) penetrated by the second guide protrusion (e.g., the second guide protrusion 242b of FIG. 4). According to an embodiment, at least a portion of the second part 265b may be fitted into the second cutout 263d2 of the flex portion 263. For example, at least a portion of the second part 265b may be provided in a shape corresponding to the second cutout 263d2.

According to an embodiment, two opposite ends of the third part 265c may be connected to the first part 265a and the second part 265b. According to an embodiment, the reinforcement portion 265 may be coupled to the FPCB 260 through an adhesive B (e.g., tape or glue) interposed between the third part 265c and the FPCB 260.

FIG. 17A is a plan view illustrating an embodiment (second embodiment) of a reinforcement portion (e.g., the second reinforcement portion 266 of FIG. 3) coupled with an FPCB (e.g., the FPCB 260 of FIG. 3) according to an embodiment. FIG. 17B is a cross-sectional view taken along line D-D' of FIG. 17A according to an embodiment.

Referring to FIGS. 17A and 17B, in an embodiment, the reinforcement portion 465 (e.g., the second reinforcement portion 266 of FIG. 3) of the FPCB 260 may be coupled to the flex portion 263 of the FPCB 260. For example, the reinforcement portion 465 may be disposed on the rear surface of the flex portion 263 of the FPCB 260. As another example, the reinforcement portion 465 may be disposed on the upper surface of the FPCB 263. According to an embodiment, a first hole 4651a through which a first guide protrusion (e.g., the first guide protrusion 242a of FIG. 4) may be formed in one side end of the reinforcement portion 465. According to an embodiment, a second hole 4652a through which a second guide protrusion (e.g., the second guide protrusion 242b of FIG. 4) passes may be formed in the other side end of the reinforcement portion 465. According to an embodiment, the reinforcement portion 465 may be formed in a flat shape. According to an embodiment, the reinforcement portion 465 may be formed of stainless steel (SUS). According to an embodiment, the reinforcement portion 465 may be coupled to the FPCB 260 through the adhesive B interposed between the reinforcement portion 465 and the FPCB 260.

FIG. 18A is a plan view illustrating an embodiment (third embodiment) of a reinforcement portion (e.g., the first reinforcement portion 265 of FIG. 3) coupled with an FPCB (e.g., the FPCB 260 of FIG. 3) according to an embodiment. FIG. 18B is a cross-sectional view taken along line E-E' of FIG. 18A according to an embodiment.

Referring to FIGS. 18A and 18B, in an embodiment, the reinforcement portion 565 (e.g., the reinforcement portion 265 of FIG. 3) of the FPCB 260 may have a side opening and be provided to fit the FPCB 260 through the side opening. According to an embodiment, the reinforcement portion 565 may be formed of rubber (or silicone). According to an embodiment, the reinforcement portion 565 may include a flat portion 565a, a first fitting portion 565b, or a second fitting portion 565c. According to an embodiment, the reinforcement portion 565 may include a first hole 5651a into which a first guide protrusion (e.g., the first guide protrusion 242a of FIG. 4) is inserted and penetrated by the flat portion 565a and the first fitting portion 565b. According to an embodiment, the reinforcement portion 565 may include a second hole 5652a into which a second guide protrusion (e.g., the first guide protrusion 242a of FIG. 4) is inserted and penetrated by the flat portion 565a and the second fitting portion 565c. According to an embodiment, the flex portion 263 of the FPCB 260 may be interposed between the flat portion 565a and the first fitting portion 565b or between the flat portion 565a and the second fitting portion 565c.

According to an embodiment, the flat portion 565a may be formed in a flat shape. According to an embodiment, the flat portion 565a may be positioned on the rear surface (e.g., -z direction) of the flex portion 263 of the FPCB 260. According to an embodiment, the flat portion 565a may extend from one end (e.g., the first cutout 263d1) to the other end (e.g., the second cutout 263d2) of the flex portion 260 of the FPCB 260.

According to an embodiment, the first fitting portion 565b may include a 1-1th part 565ba and a 1-2th part 565bb. According to an embodiment, the 1-1th part 565ba may extend upward from one end of the flat portion 565a. According to an embodiment, the 1-1th part 565ba may come into contact with the first cutout 263d1 of the flex portion 260. For example, the 1-1th part 565ba may be formed in a shape corresponding to the first cutout 263d1. According to an embodiment, the 1-2th part 565bb may be formed to cover at least a portion of the upper surface of the FPCB 260. According to an embodiment, the width (e.g., W2) of the 1-2th part 565bb may be larger than the width (e.g., W1) of the 1-1th part 565ba.

According to an embodiment, the second fitting portion 565c may include a 2-1th part 565ca and a 2-2th part 565cb. According to an embodiment, the 2-1th part 565ca may extend upward from the other end of the flat portion 565a. According to an embodiment, the 2-1th part 565cb may come into contact with the second cutout 263d2 of the flex portion 260. For example, the 2-1th part 565cb may be formed in a shape corresponding to the second cutout 263d2. According to an embodiment, the 2-2th part 565cb may be formed to cover at least a portion of the upper surface of the FPCB 260. According to an embodiment, the width W2 of the 2-2th part 565cb may be larger than the width W1 of the 2-1th part 565ca.

FIG. 19A is a plan view illustrating an embodiment (fourth embodiment) of a reinforcement portion (e.g., the first reinforcement portion 265 of FIG. 3) coupled with an FPCB (e.g., the FPCB 260 of FIG. 3). FIG. 19B is a plan view illustrating the reinforcement portion (e.g., the first reinforcement portion 265 of FIG. 3) shown in FIG. 19A.

Referring to FIGS. 19A and 19B, in an embodiment, a foldable electronic device (e.g., the foldable electronic device 200 of FIG. 2) may include an FPCB 260 or a hinge housing 641. According to an embodiment, the hinge housing 641 may be provided to receive at least a portion of the FPCB 260. In an embodiment, the hinge housing 641 may include a pair of guide protrusions 642a and 642b shaped as square protrusions. The pair of guide protrusions 642a and 642b may have the same function and/or operation except for differences in shape from the pair of guide protrusions 242a and 242b of FIG. 4 described above.

The guide portions (e.g., the guide portions 2651 and 2652 of FIG. 3) of the reinforcement portion 665 may include guide ribs 6651b and 6652b formed by cutting inward from two opposite ends of the reinforcement portion 665 so that one side thereof is open. According to an embodiment, the guide ribs 6651b and 6652b may include a first guide rib 6651b or a second guide rib 6652b.

According to an embodiment, the first guide rib 6651b may be formed by cutting inward from one end of the reinforcement portion 665 so that one side thereof is open. According to an embodiment, the first guide protrusion 642a may pass through the side opening of the first guide rib 6651b. According to an embodiment, the first guide rib 6651b may be provided to surround at least a portion of the side surface of the first guide protrusion 642a. For example, the remaining surfaces of the first guide rib 6651b except for the open surface may face the first guide protrusion 642a. According to an embodiment, the first guide rib 6651b may be formed in a shape corresponding to the first cutout (e.g., the first cutout 263d1 of FIG. 5) of the flex portion 263.

According to an embodiment, the second guide rib 6652b may be formed by cutting inward from the other end of the reinforcement portion 665 so that the other side thereof is open. According to an embodiment, the second guide protrusion 642b (e.g., the second guide protrusion 242b of FIG. 4) may pass through the other open side of the second guide rib 6652b. According to an embodiment, the second guide rib 6652b may be provided to surround at least a portion of the side surface of the second guide protrusion 642b. For example, the remaining surfaces of the second guide rib 6652b except for the open surface may face the second guide protrusion 642b. According to an embodiment, the second guide rib 6652b may be formed in a shape corresponding to the second cutout (e.g., second cutout 263d2 of FIG. 5) of the flex portion 263.

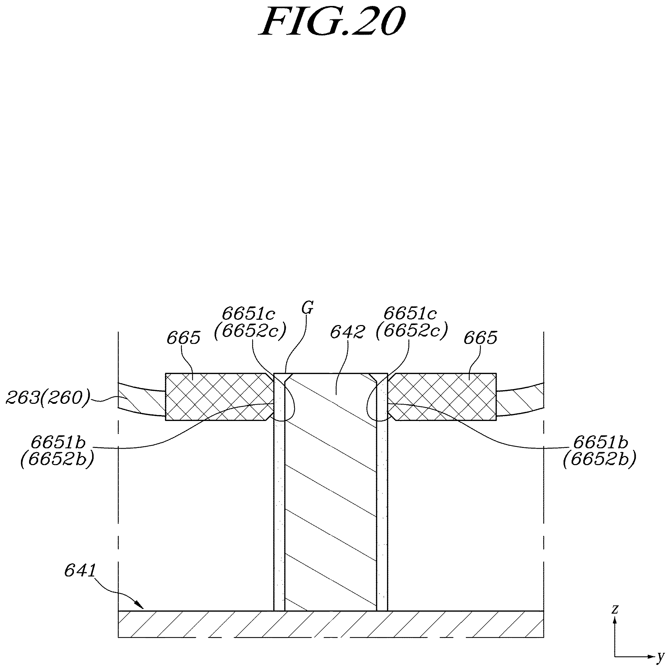

FIG. 20 is a cross-sectional view illustrating a structure for mitigating friction due to an asymmetrical shape in an FPCB (e.g., the FPCB 260 of FIG. 3) in a foldable electronic device (e.g., the foldable electronic device 200 of FIG. 2) according to an embodiment of the disclosure.

Referring to FIG. 20, in an embodiment, the reinforcement portion 665 may include edge portions 6651c and 6652c. According to an embodiment, the edge portions 6651c and 6652c may be formed at end portions 6651b and 6652b of the reinforcement portion 665 facing the guide protrusion 642. According to an embodiment, the edge portions 6651c and 6652c may prevent noise or wear due to friction that may occur during the asymmetric movement of the reinforcement portion 665. For example, the edge portions 6651c and 6652c may be chamfered toward the guide protrusion 642 so that friction between the guide protrusion 642 and the reinforcement portion 665 is minimized. According to an embodiment, the edge portions 6651c and 6652c may be formed on the upper surfaces (e.g., z direction) or lower surfaces (e.g., -z direction) of end portions 6651b and 6652b of the reinforcement portion 665.

According to an embodiment, a surface of the guide protrusion 642 may be coated with a lubricant G to minimize friction between the guide protrusion 642 and the reinforcement portion 665. According to an embodiment, the lubricant G may be formed of a material with strong water resistance. In this case, even when moisture penetrates into the foldable electronic device (e.g., the foldable electronic device 200 of FIG. 2 and the foldable electronic device 300 of FIG. 8), loss of the lubricant G due to moisture may be prevented.

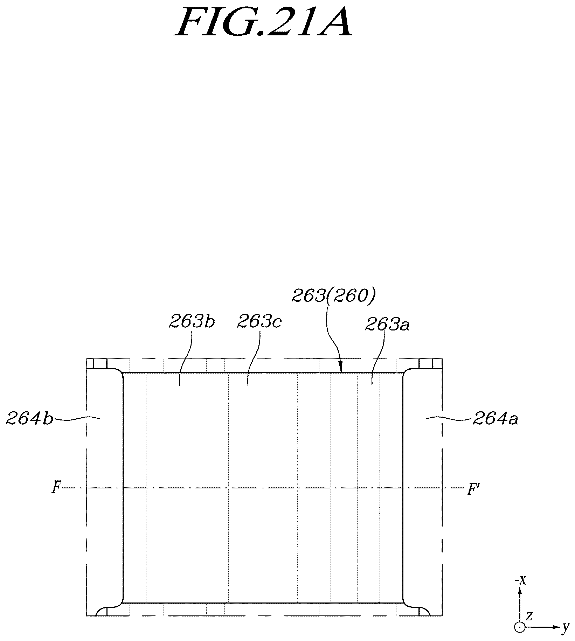

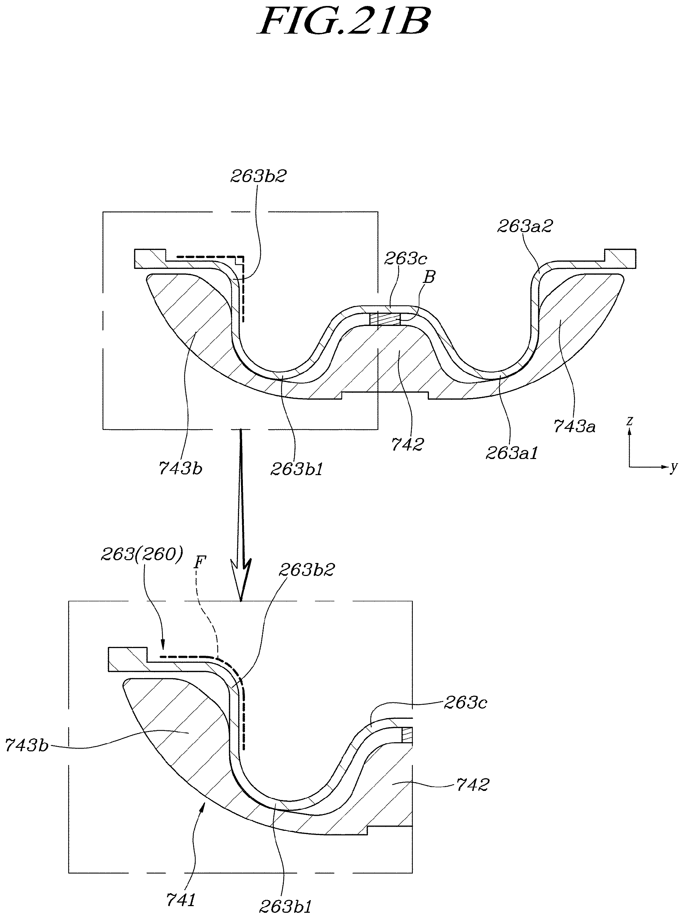

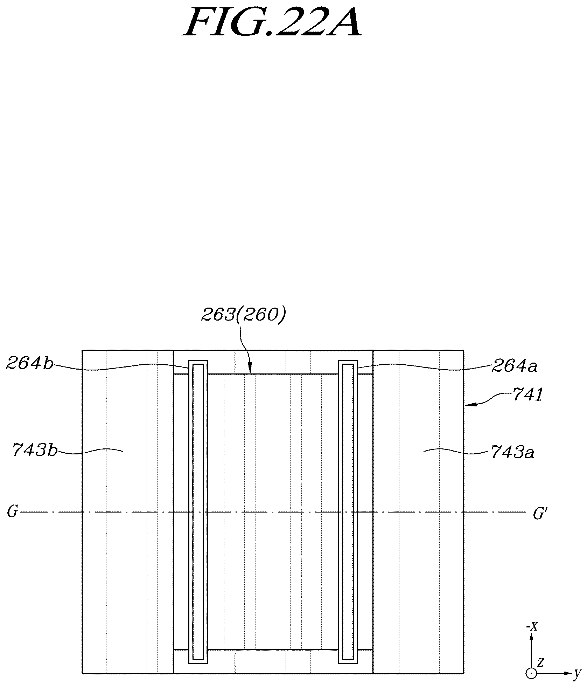

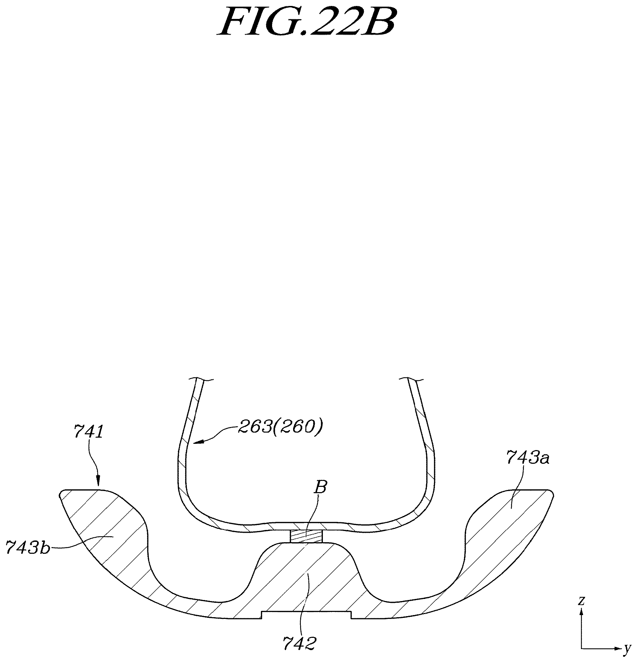

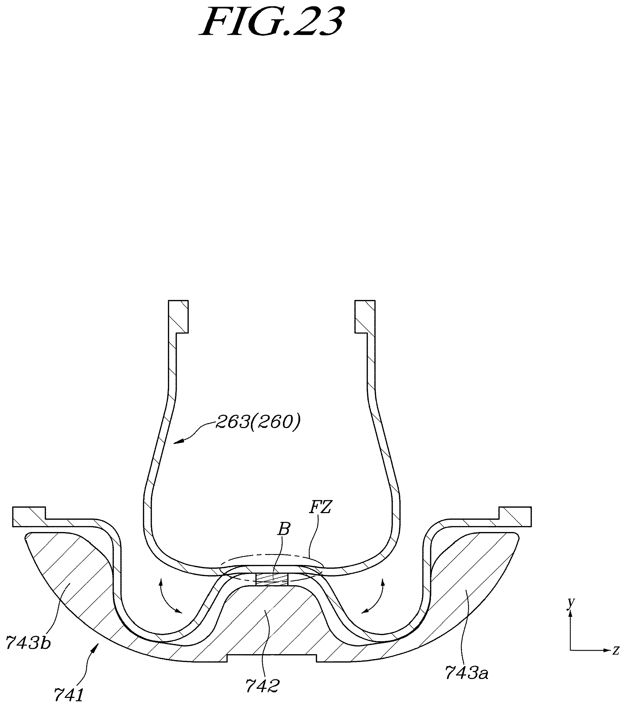

FIG. 21A is a plan view illustrating a state of an FPCB (e.g., the FPCB 260 of FIG. 3) in an unfolded state of a foldable electronic device (e.g., the foldable electronic device 200 of FIG. 2) according to an embodiment of the disclosure. FIG. 21B is a cross-sectional view taken along line F-F' of FIG. 21A according to an embodiment of the disclosure. FIG. 22A is a plan view illustrating a state of an FPCB (FPCB 260 of FIG. 3) in a folded state of a foldable electronic device (e.g., the foldable electronic device 200 of FIG. 2) according to an embodiment of the disclosure. FIG. 22B is a cross-sectional view taken along line G-G' of FIG. 22A according to an embodiment of the disclosure. FIG. 23 is a cross-sectional view illustrating a movement of an FPCB (e.g., the FPCB 260 of FIG. 3) in an unfolded or folded state of a foldable electronic device (e.g., the foldable electronic device 200 of FIG. 2) according to an embodiment of the disclosure.

Referring to FIGS. 21 to 23, in an embodiment, a foldable electronic device (e.g., the foldable electronic device 200 of FIG. 2) includes an FPCB 260 or a hinge housing 741. According to an embodiment, the hinge housing 741 is provided to receive at least a portion of the FPCB 260.

In a non-claimed exemplary embodiment, the hinge housing 741 may include a first protrusion 742 and a pair of second protrusions 743.

According to a non-claimed exemplary embodiment, the first protrusion 742 may protrude upward from the central portion of the hinge housing 741. According to anon-claimed exemplary embodiment, the pair of second protrusions 743 may protrude from two opposite ends of the hinge housing 741 toward the FPCB 260. For example, the pair of second protrusions 743 may include a 2-1th protrusion 743a protruding from one end of the hinge housing 741 and a 2-2th protrusion 743b protruding from the other end of the hinge housing 741. According to an embodiment, the first protrusion 742 may be positioned between the pair of second protrusions 743. In an embodiment, the height of the first protrusion 742 may be formed to be lower than the heights of the second protrusions 743a and 743b. According to an embodiment, the hinge housing 741 may have a cross section overall in a W shape.

According to a non-claimed exemplary embodiment, the foldable electronic device 200 may include a fixing portion B (e.g., adhesive) for coupling the FPCB 260 to the hinge housing 741 at the first protrusion 742. For example, the fixing portion B may be an adhesive, such as glue or tape. The foldable electronic device 200 may form a non-moving area FZ in which the FPCB 260 does not move when the foldable electronic device 200 is unfolded or folded, through the fixing portion B. Accordingly, when the foldable electronic device 200 is unfolded or folded, an asymmetric shape in the FPCB 260 may be prevented.

According to a non-claimed exemplary embodiment, when the foldable electronic device 200 is unfolded, the central portion 263c of the FPCB 260 may be disposed adjacent to the first protrusion 742 of the hinge housing 741. According to an embodiment, when the foldable electronic device 200 is unfolded, the first bending portion 263a of the FPCB 260 may be disposed adjacent to the 2-1th protrusion 743a. For example, during unfolding of the foldable electronic device 200, the 1-1th bending portion 263a1 may be bent inward of the hinge housing 741, and the 1-2th bending portion 263a2 may be bent outward of the hinge housing 741. According to an embodiment, when the foldable electronic device 200 is unfolded, the second bending portion 263b of the FPCB 260 may be disposed adj acent to the 2-2th protrusion 743b. For example, during unfolding of the foldable electronic device 200, the 2-1st bending portion 263b1 may be bent inward of the hinge housing 741, and the 2-2th bending portion 263b2 may be bent outward of the hinge housing 741. According to an embodiment, in the unfolded state of the foldable electronic device 200, the 1-2th bending portion 263a2 and the 2-2th bending portion 263b2 may be bent, at a right angle or larger angle, not an acute angle, to the outside of the hinge housing 741. Accordingly, the repulsive force acting between the flex portion 263 of the FPCB 260 and other components may be mitigated, and the tension T acting to the FPCB 260 (e.g., the 1-2th bending portion 263a2 or 2-2th bending portion 263b2) may be reduced, so that folding durability may be enhanced.

According to an embodiment of the disclosure, a foldable electronic device (e.g., the foldable electronic device 200 of FIG. 2A) comprises a flexible printed circuit board (FPCB) (e.g., the flexible printed circuit board 260 of FIG. 3), a hinge structure (e.g., the hinge structure 240 of FIG. 2B) connecting a first housing (e.g., the first housing 210 of FIG. 2B) and a second housing (e.g., the second housing 220 of FIG. 2B), a hinge housing (e.g., the hinge housing 241 of FIG. 3) receiving at least a portion of the hinge structure 240 and the FPCB 260 and including a guide protrusion (e.g., the guide protrusion 242 of FIG. 4) protruding upward from an inner surface, and a reinforcement portion (e.g., the reinforcement portion 265 and 266 of FIG. 3) coupled to the FPCB 260 and including a guide portion (e.g., the guide portions 2651, 2652, 2661, and 2662 of FIG. 3) for guiding a vertical movement of the FPCB 260 along the guide protrusion 242 in response to a movement of the first housing 210 and the second housing 220. The guide protrusion 242 protruding upward from an inner surface may support to guide the motion of the FPCB 260 according to the unfolding or folding of the foldable electronic device 200. Furthermore, as the guide portion 2651, 2652, 2661, 2662 guides a vertical movement of the FPCB 260 along the guide protrusion 242 in response to a movement of the first housing 210 and the second housing 220, it may prevent the asymmetrical folding or unfolding motion from the asymmetrically shaped FPCB 260 even when the FPCB 260 is repeatedly folded or unfolded. Therefore, it may prevent various defects caused by the asymmetrical FPCB 260 such as a crack of FPCB 260 or flexible display 270 caused by the imbalanced folding motion from the asymmetrical FPCB 260.

According to an embodiment of the disclosure, the guide protrusion 242 may include a chamfered portion (e.g., the chamfered portion 2422 of FIG. 14) having a diameter gradually decreasing upward. The chamfered portion 2422 may enhance the stability of the vertical movement of the FPCB 260 along the guide protrusion 242. Further, it may reduce the unnecessary friction generated between the guide protrusion 242 and the reinforce member 256 through the repetitive folding or unfolding motions by having a diameter of the guide protrusion 242 gradually decreasing upward. Thereby, it may achieve the enhanced durability of the foldable electronic device 200 for the repetitive folding or unfolding motions.

According to an embodiment of the disclosure, the guide portion 2651 and 2652 may include a hole (e.g., the holes 2651a and 2652a of FIG. 5) through which the guide protrusion 242 passes.

According to an embodiment of the disclosure, an end of the guide portion 2651, 2652, 2661, and 2662 may be chamfered toward the guide protrusion 242. Therefore, the friction between the guide protrusion 242 and the reinforcement portion 265, 266 may be minimized.

According to an embodiment of the disclosure, a surface of the guide protrusion 242 may be coated with a high water-resistance lubricant (e.g., the lubricant G of FIG. 20).

According to an embodiment of the disclosure, the reinforcement portion 265 may be formed over the FPCB 260 to cover a vicinity of a center of the FPCB 260. Therefore, it may enhance the durability of the FPCB 260 from the repetitive vertical movements.

According to an embodiment of the disclosure, the reinforcement portion 265 may be coupled to a vicinity of a center of the FPCB and have a flat plate shape. Therefore, it may enhance the durability of the FPCB 260 from the repetitive vertical movements. Further, it may effectively reduce the volume of the reinforcement portion 265 in order to minimize the size of the overall foldable electronic device 200.

According to an embodiment of the disclosure, the reinforcement portion 265 may have a fitting gap on a side thereof, and a vicinity of an edge of the FPCB 260 may be fitted into the fitting gap. Therefore, it may improve the smooth folding and unfolder motion of the foldable electronic device 200. Further, it may enhance the durability of FPCB 260 and the guide protrusion 242 by having a fitting gap to effectively reduce the friction between them through the repetitive vertical movements of the FPCB 260.

According to an embodiment of the disclosure, the guide portion 2651 and 2652 may be formed by being cut inward to allow the guide protrusion 242 to pass therethrough. Therefore, it may guide the vertical movement of FPCB 260 along the guide protrusion 242 as the guide protrusion 242 may be allowed to pass through the guide portion 2651 and 2652 for the stable vertical movement.

According to an embodiment of the disclosure, the FPCB 260 may include a cutout (e.g., the cutout 263d of FIG. 5) formed by being cut inward to allow the guide protrusion 242 to pass therethrough. Therefore, it may support the vertical movement of FPCB 260 along the guide protrusion 242 as the guide protrusion 242 may be allowed to pass through the FPCB 260 for the stable vertical movement.

According to an embodiment of the disclosure, a height of the guide protrusion 242 may be equal to or larger than a sum of a vertical movement (e.g., the vertical movement ΔH of FIG. 13) of the reinforcement portion 265 and 266 and a thickness (e.g., the thickness t of FIG. 13) of the reinforcement portion 265 and 266. It may secure the stable vertical movement of FPCB 260 along the guide protrusion 242 without deviating from the guide protrusion 242 as the height (h1) of the guide protrusion 242 may be sufficient to cover the sum of the vertical movement ΔH of the reinforcement portion and a thickness t of the reinforcement portion 265 and 266.

According to an embodiment of the disclosure, the foldable electronic device may further comprise a flexible display (e.g., the flexible display 270 of FIG. 3) disposed on the FPCB 260. A free end of the guide protrusion 242 may be spaced apart from the flexible display 270 not to contact a lower surface of the flexible display 270 in an unfolded state in which the first housing 210 and the second housing 220 are open or in a folded state in which the first housing 210 and the second housing 220 are closed to face each other. Therefore, it may ensure the sufficient distance between the guide protrusion 242 and the flexible display 270 for the folding and unfolding motions of the foldable electronic device 200. Therefore, it may prevent a crack on the flexible display 270 which may be caused by the repetitive contacts between the flexible display 270 and the guide protrusion 242 through the folding and unfolding motions.

According to an embodiment of the disclosure, a gap between the free end of the guide protrusion 242 and the lower surface of the flexible display 270 may be 0.80mm or more.

According to an embodiment of the disclosure, a gap may be formed between the guide protrusion 242 and the guide portion 2651, 2652, 2661, and 2662 to minimize friction therebetween when the FPCB 260 moves up or down.

According to an embodiment of the disclosure, the gap between the guide portion 2651, 2652, 2661, and 2662 and the guide protrusion 242 may be 0.05mm to 0.10mm.

According to an embodiment of the disclosure, the FPCB 260 may include a flex portion 263 connects the FPCB 260 and the reinforcement portion 265.

According to a non-claimed exemplary embodiment of the disclosure, a foldable electronic device 200 may comprise a flexible printed circuit board (FPCB) 260, a hinge structure 240 connecting a first housing 210 and a second housing 220, a hinge housing 741 receiving at least a portion of the hinge structure 240 and the FPCB 260 and including a first protrusion (e.g., the first protrusion 742 of FIG. 22B) and a second protrusion (e.g., the second protrusions 743a and 743b of FIG. 22B) protruding upward in a vicinity of a center thereof, and a fixing portion B coupling the FPCB 260 to the hinge housing 741 in the first protrusion 742 and the second protrusion 743a and 743b.

According to a non-claimed exemplary embodiment of the disclosure, the first protrusion 742 and the second protrusion 743a and 743b may form a pair protruding from two opposite ends of the hinge housing 741 to the FPCB 260.

According to a non-claimed exemplary embodiment of the disclosure, a bending angle of the FPCB formed in the second protrusion 743a and 743b in a fully bent state in which the first housing 210 and the second housing 220 face each other may be a right angle or more.

According to a non-claimed exemplary embodiment of the disclosure, a free end of the first protrusion 742 or the second protrusion 743a and 743b may be spaced apart from a flexible display 270 not to contact a lower surface of the flexible display 270 in an unfolded state in which the first housing 210 and the second housing 220 are open or in a folded state in which the first housing 210 and the second housing 220 are closed to face each other.

According to a non-claimed exemplary embodiment of the disclosure, a gap between the free end of the first protrusion 742 or the second protrusion 743a and 743b and the lower surface of the flexible display 270 may be 0.80mm or more.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (200, 300), comprising:
a flexible printed circuit board, FPCB, (260, 360);
a hinge structure (240, 340) connecting a first housing (210, 310) and a second housing (220, 320); and
a hinge housing (241, 341, 641, 741) receiving at least a portion of the hinge structure (240, 340) and the FPCB (260, 360),
**characterized in that**:
the hinge housing (241, 341, 641, 741) included a guide protrusion (242) protruding upward from an inner surface; and
the foldable electronic device (200, 300) further comprises a reinforcement portion (265, 266, 365, 465, 565, 665) coupled to the FPCB (260, 360) and including a guide portion (2651, 2652, 2661, 2662) for guiding a vertical movement of the FPCB (260, 360) along the guide protrusion (242) in response to a movement of the first housing (210, 310) and the second housing (220, 320).

2. The foldable electronic device (200, 300) of claim 1, wherein the guide protrusion (242) includes a chamfered portion (2422) having a diameter gradually decreasing upward.

3. The foldable electronic device (200, 300) of claim 1 or 2, wherein the guide portion (2651, 2652, 2661, 2662) includes a hole (2651a, 2652a) through which the guide protrusion (242) passes.

4. The foldable electronic device (200, 300) of any one of the preceding claims, wherein an end of the guide portion (2651, 2652, 2661, 2662) is chamfered toward the guide protrusion (242).

5. The foldable electronic device (200, 300) of any one of the preceding claims, wherein a surface of the guide protrusion (242) is coated with a high water-resistance lubricant (G).

6. The foldable electronic device (200, 300) of any one of the preceding claims, wherein the reinforcement portion (265) is formed over the FPCB (260) to cover a vicinity of a center of the FPCB (260).

7. The foldable electronic device (200, 300) of any one of the preceding claims, wherein the reinforcement portion (265) is coupled to a vicinity of a center of the FPCB (260) and has a flat plate shape.

8. The foldable electronic device (200, 300) of any one of the preceding claims, wherein the reinforcement portion (265) has a fitting gap on a side thereof, and wherein a vicinity of an edge of the FPCB (260, 360) is fitted into the fitting gap.

9. The foldable electronic device (200, 300) of any one of the preceding claims, wherein the guide portion (2651, 2652) is formed by being cut inward to allow the guide protrusion (242) to pass therethrough.

10. The foldable electronic device (200, 300) of any one of the preceding claims, wherein the FPCB (260) includes a cutout (263d) formed by being cut inward to allow the guide protrusion (242) to pass therethrough.

11. The foldable electronic device (200, 300) of any one of the preceding claims, wherein a height (h1) of the guide protrusion (242) is equal to or larger than a sum of a vertical movement (ΔH) of the reinforcement portion and a thickness (t) of the reinforcement portion.

## Patentansprüche

1. Faltbare elektronische Vorrichtung (200, 300), umfassend:
eine flexible Leiterplatte, FPCB, (260, 360);
eine Scharnierstruktur (240, 340), die ein erstes Gehäuse (210, 310) und ein zweites Gehäuse (220, 320) verbindet; und
ein Scharniergehäuse (241, 341, 641, 741), das mindestens einen Abschnitt der Scharnierstruktur (240, 340) und der FPCB (260, 360) aufnimmt,
**dadurch gekennzeichnet, dass**:
das Scharniergehäuse (241, 341, 641, 741) einen Führungsvorsprung (242) umfasst, der von einer Innenfläche nach oben vorsteht; und
die faltbare elektronische Vorrichtung (200, 300) ferner einen Verstärkungsabschnitt (265, 266, 365, 465, 565, 665) umfasst, der mit der FPCB (260, 360) gekoppelt ist und einen Führungsabschnitt (2651, 2652, 2661, 2662) zum Führen einer vertikalen Bewegung der FPCB (260, 360) entlang des Führungsvorsprungs (242) als Reaktion auf eine Bewegung des ersten Gehäuses (210, 310) und des zweiten Gehäuses (220, 320) umfasst.

2. Faltbare elektronische Vorrichtung (200, 300) nach Anspruch 1, wobei der Führungsvorsprung (242) einen abgeschrägten Abschnitt (2422) mit einem nach oben hin allmählich abnehmenden Durchmesser umfasst.

3. Faltbare elektronische Vorrichtung (200, 300) nach Anspruch 1 oder 2, wobei der Führungsabschnitt (2651, 2652, 2661, 2662) ein Loch (2651a, 2652a) umfasst, durch das der Führungsvorsprung (242) verläuft.

4. Faltbare elektronische Vorrichtung (200, 300) nach einem der vorhergehenden Ansprüche, wobei ein Ende des Führungsabschnitts (2651, 2652, 2661, 2662) in Richtung des Führungsvorsprungs (242) abgeschrägt ist.

5. Faltbare elektronische Vorrichtung (200, 300) nach einem der vorhergehenden Ansprüche, wobei eine Oberfläche des Führungsvorsprungs (242) mit einem hoch wasserfesten Schmiermittel (G) beschichtet ist.

6. Faltbare elektronische Vorrichtung (200, 300) nach einem der vorhergehenden Ansprüche, wobei der Verstärkungsabschnitt (265) über der FPCB (260) ausgebildet ist, um eine nahe Umgebung einer Mitte der FPCB (260) abzudecken.

7. Faltbare elektronische Vorrichtung (200, 300) nach einem der vorhergehenden Ansprüche, wobei der Verstärkungsabschnitt (265) mit einer nahen Umgebung der Mitte der FPCB (260) gekoppelt ist und die Form einer flachen Platte hat.

8. Faltbare elektronische Vorrichtung (200, 300) nach einem der vorhergehenden Ansprüche, wobei der Verstärkungsabschnitt (265) auf einer Seite davon einen Einpassungsspalt aufweist und wobei eine nahe Umgebung einer Kante der FPCB (260, 360) in den Einpassungspalt eingepasst ist.

9. Faltbare elektronische Vorrichtung (200, 300) nach einem der vorhergehenden Ansprüche, wobei der Führungsabschnitt (2651, 2652) ausgebildet wird, indem er nach innen geschnitten wird, um dem Führungsvorsprung (242) zu ermöglichen, durch ihn zu verlaufen.

10. Faltbare elektronische Vorrichtung (200, 300) nach einem der vorhergehenden Ansprüche, wobei die FPCB (260) einen Ausschnitt (263d) umfasst, der ausgebildet wird, indem er nach innen geschnitten wird, um dem Führungsvorsprung (242) zu ermöglichen, durch ihn zu verlaufen.

11. Faltbare elektronische Vorrichtung (200, 300) nach einem der vorhergehenden Ansprüche, wobei eine Höhe (h1) des Führungsvorsprungs (242) gleich oder größer ist als eine Summe einer vertikalen Bewegung (ΔH) des Verstärkungsabschnitts und einer Dicke (t) des Verstärkungsabschnitts.

## Revendications

1. Dispositif électronique pliable (200, 300), comprenant :
une carte de circuit imprimé flexible, FPCB, (260, 360) ;
une structure articulée (240, 340) reliant un premier boîtier (210, 310) et un deuxième boîtier (220, 320) ; et
un boîtier de charnière (241, 341, 641, 741) recevant au moins une partie de la structure de charnière (240, 340) et de la FPCB (260, 360),
**caractérisé en ce que** :
le boîtier de charnière (241, 341, 641, 741) comprend une saillie de guidage (242) faisant saillie vers le haut à partir d'une surface intérieure ; et
le dispositif électronique pliable (200, 300) comprend en outre une partie de renforcement (265, 266, 365, 465, 565, 665) couplée à la FPCB (260, 360) et comprenant une partie de guidage (2651, 2652, 2661, 2662) destinée à guider un mouvement vertical de la FPCB (260, 360) le long de la saillie de guidage (242) en réponse à un mouvement du premier boîtier (210, 310) et du deuxième boîtier (220, 320).

2. Dispositif électronique pliable (200, 300) de la revendication 1, dans lequel la saillie de guidage (242) comprend une partie chanfreinée (2422) dont le diamètre diminue progressivement vers le haut.

3. Dispositif électronique pliable (200, 300) de la revendication 1 ou 2, dans lequel la partie de guidage (2651, 2652, 2661, 2662) comprend un trou (2651a, 2652a) à travers lequel passe la saillie de guidage (242).

4. Dispositif électronique pliable (200, 300) de l'une quelconque des revendications précédentes, dans lequel une extrémité de la partie de guidage (2651, 2652, 2661, 2662) est chanfreinée vers la saillie de guidage (242).

5. Dispositif électronique pliable (200, 300) de l'une quelconque des revendications précédentes, dans lequel une surface de la saillie de guidage (242) est revêtue d'un lubrifiant à haute résistance à l'eau (G).

6. Dispositif électronique pliable (200, 300) de l'une quelconque des revendications précédentes, dans lequel la partie de renforcement (265) est formée sur la FPCB (260) pour couvrir un voisinage d'un centre de la FPCB (260).

7. Dispositif électronique pliable (200, 300) de l'une quelconque des revendications précédentes, dans lequel la partie de renforcement (265) est couplée à une partie proche d'un centre de la FPCB (260) et a une forme de plaque plate.

8. Dispositif électronique pliable (200, 300) de l'une quelconque des revendications précédentes, dans lequel la partie de renforcement (265) présente un espace d'ajustement sur un côté de celle-ci, et dans lequel un voisinage d'un bord de la FPCB (260, 360) est ajustée dans l'espace d'ajustement.

9. Dispositif électronique pliable (200, 300) de l'une quelconque des revendications précédentes, dans lequel la partie de guidage (2651, 2652) est formée en étant découpée vers l'intérieur pour permettre à la saillie de guidage (242) de la traverser.

10. Dispositif électronique pliable (200, 300) de l'une quelconque des revendications précédentes, dans lequel la FPCB (260) comprend une découpe (263d) formée en étant découpée vers l'intérieur pour permettre à la saillie de guidage (242) de la traverser.

11. Dispositif électronique pliable (200, 300) de l'une quelconque des revendications précédentes, dans lequel une hauteur (h1) de la saillie de guidage (242) est égale ou supérieure à une somme d'un déplacement vertical (ΔH) de la partie de guidage et d'une épaisseur (t) de la partie de renforcement.
